# EUROPÄISCHE PATENTSCHRIFT

(11) **EP 4 077 572 B1**
(45) Veröffentlichungstag und Bekanntmachung des Hinweises auf die Patenterteilung: **01.04.2026**
(21) Anmeldenummer: 20838361.2
(22) Anmeldetag: 09.12.2020
(51) Int. Cl.: C09J 153/02, C09J 7/38, C09J 11/06

(54) **KLEBEBAND GEEIGNET FÜR DEN FLIEGENDEN ROLLENWECHSEL VON MATERIALIEN MIT NIEDERENERGETISCHEN OBERFLÄCHEN**
ADHESIVE TAPE SUITABLE FOR AN ON-THE-FLY ROLL CHANGE OF MATERIALS WITH LOW-ENERGY SURFACES
RUBAN ADHÉSIF APPROPRIÉ POUR UN CHANGEMENT DE ROULEAU À LA VOLÉE DE MATÉRIAUX À SURFACES À FAIBLE ÉNERGIE

(30) Priorität: 20.12.2019 DE 102019220424
(43) Veröffentlichungstag der Anmeldung: 26.10.2022
(73) Patentinhaber: tesa SE, 22848 Norderstedt (DE)
(72) Erfinder: GARBERS, Julia, 22159 Hamburg (DE); DOLLASE, Thilo, 22397 Hamburg (DE); CZERWONATIS, Niels, 22393 Hamburg (DE); KÖSTNER, Felix, 22335 Hamburg (DE)
(74) Vertreter: tesa SE
(86) Internationale Anmeldenummer: PCT/EP2020/085293
(87) Internationale Veröffentlichungsnummer: WO 2021/122227

(56) Entgegenhaltungen:
- EP-A1- 1 988 141
- EP-A1- 3 173 452
- EP-A1- 3 431 563
- WO-A1-2018/184198

## Beschreibung

Die Erfindung betrifft ein Klebeband insbesondere zur Verwendung für den fliegenden Rollenwechsel von auf Rollen aufgewickeltem Flachbahnmaterial gemäß den Merkmalen des Oberbegriffs des Hauptanspruchs sowie ein Verfahren für den fliegenden Rollenwechsel von auf Rollen aufgewickeltem unpolaren Flachbahnmaterial.

Bei der Verarbeitung von Flachbahnmaterial (Papier, Folien, Vliese oder dergleichen) ist der fliegende Rollenwechsel ein gängiges Verfahren, um eine alte, fast abgespulte Rolle durch eine neue Rolle zu ersetzen, ohne die schnell laufenden Maschinen dafür anhalten zu müssen. Bei derartigen fliegenden Rollenwechseln kommen häufig Haftklebebänder zum Einsatz, beispielsweise zum Einen um das Ende der alten Bahn mit dem Anfang der neuen Bahn zu verbinden und zum Anderen, um an der Aufwicklung die Bahn bei voller Maschinengeschwindigkeit an einen neuen Kern anzukleben.

Die Durchführung eines fliegenden Rollenwechsels (auch "dynamischer Rollenwechsel" genannt) erfolgt in der folien- und vliesverarbeitenden Industrie bei Materialien mit unpolaren Oberflächen nach zwei unterschiedlichen Verfahren.

Bei dem ersten Verfahren werden doppelseitig klebende Selbstklebebänder in Handarbeit am Bahnanfang der Bahn der neuen Rolle in einer vorteilhaften Anordnung verklebt (üblicherweise gerade, oder w- oder v-förmig) und das an dem Klebeband überstehende Bahnmaterial abgetrennt. Zusätzlich wird der Anfang der Bahn der neuen Rolle mit sogenannten Festhalteetiketten an der darunter liegenden Wicklung der neuen Rolle fixiert, um zu verhindern, dass die Bahn abgewickelt wird, wenn die neue Rolle auf die Umfangsgeschwindigkeit der alten Rolle beschleunigt. Nachteilig an diesem Verfahren ist, dass die Vorbereitung der Rollen sehr zeitaufwändig ist und das Verkleben den Einsatz von Fachkräften erfordert. Zudem führt das Verfahren nicht immer zu den gewünschten Ergebnissen, da die so erzielten Verklebungen durch die Schichtung von Bahnmaterial, Festhalteetiketten und Klebestreifen relativ dick sind. Ferner kann es gerade bei dünnen, flexiblen Bahnmaterialien dazu kommen, dass am Anfang einer neuen Bahn infolge des bei der Rotation auftretenden gegengerichteten Luftstroms Ausstülpungen im Bahnmaterial auftreten, was im allgemeinen zu einer schlechten Verklebung der Bahnen führen kann.

Bei dem zweiten bekannten Verfahren wird ein einseitig klebendes Selbstklebeband überlappend und in gerader Linie unter das freie Ende der obersten Bahn der neuen Rolle verklebt, so dass die klebende Seite nach außen zeigt und nur zum Teil von der neuen Bahn abgedeckt ist. Der freiliegende Teil der nach außen zeigenden klebenden Seite wird mit der Bahn der alten Rolle verklebt. Um bei diesem Verfahren ein Abwickeln der Bahn beim Beschleunigen der neuen Rolle auf die Oberflächengeschwindigkeit der alten Rolle zu verhindern, wird zwischen der obersten Wicklung der neuen Rolle und der darunter liegenden Wicklung eine Flüssigkeit eingebracht, so dass die obere Wicklung an der darunter liegenden Wicklung durch die Kapillarkräfte fixiert wird. Nachteilig hierbei ist, dass auch dieses Verfahren den Einsatz von Fachpersonal erfordert und dennoch nicht immer zu technisch vorteilhaften Ergebnissen führt, da die Effizienz einer Fixierung des Bahnmaterials durch eine Flüssigkeit von vielen Parametern abhängt, beispielsweise der Oberflächenenergie, Flexibilität und dem Flächengewicht des Folienmaterials, von der eingesetzten Flüssigkeitsmenge, deren Polarität, Viskosität, Dichte, sowie der Schichtdicke, Fläche und dem Scherverhalten des Flüssigkeitsfilms. Ein entscheidender Nachteil dieses Verfahrens besteht zudem darin, dass die Bahngeschwindigkeit beim Rollenwechsel nicht zu hoch sein darf und es außerdem zu einer Verunreinigung der Anlage und des Bahnmaterials infolge der verwendeten Flüssigkeit kommt.

Obiges Verfahren kommt auch in der papierverarbeitenden Industrie zum Einsatz. Dort stellt eine Weiterentwicklung des ersten Verfahrens das Spleißverfahren (Splicing-Verfahren) dar, bei dem das zur Fixierung dienende Fix (in diesem Zusammenhang ein doppelseitiges Klebeband, das im Inneren ein Trägermaterial enthält) in das die Papierbahnen verbindende Selbstklebeband integriert ausgebildet ist. Nach Verbinden der Bahnen spaltet hierbei ein spaltfähiger Träger auf, so dass ein Teil des spaltfähigen Trägers auf dem die Bahnen verbindenden Selbstklebeband verbleibt (d. h. an der oberen Wicklung), während der andere Teil an der darunter liegenden Wicklung verbleibt. Als "spaltfähig" werden solche Träger bezeichnet, die parallel zu ihrer Flächenausdehnung spaltbar sind, und insbesondere solche Träger, die bezogen auf die Anforderungen in einem Spleißverfahren auch tatsächlich spalten.

Zur Durchführung dieses Verfahrens sind in der papierverarbeitenden Industrie etliche Produkte bekannt. So offenbart etwa DE 196 32 689 A2 ein Klebeband, das zusätzlich zu dem Hauptträger mit einem spaltfähigen Papierträger ausgerüstet ist. Bei den dynamischen Belastungen beim Verbinden der Bahnen beider Rollen spaltet der Papierträger auf und deckt mit seinen Resten die zur Fixierung verwendete Klebmasse in einem Bereich nichtklebend ab, der bei anderen Klebebändern ansonsten offen liegen bleibt. DE 199 02 179 A1 offenbart ebenfalls ein derartiges Klebeband, bei dem der spaltfähige Papierträger gegenüber dem Hauptträger versetzt angeordnet ist, um unter Belastung das Auftreten von Reißern zu verhindern.

Zur Verbesserung des fliegenden Rollenwechsels in der folien- und vliesverarbeitenden Industrie werden mittlerweile auch Klebebänder eingesetzt, die ähnlich konzipiert sind wie solche, die bereits aus der papierverarbeitenden Industrie bekannt sind. Insbesondere wird dies angestrebt für Folien- und Vliesmaterialien mit unpolaren Oberflächen. Derartige unpolare Oberflächen treten bei Materialien mit einer geringen Oberflächenenergie auf, beispielsweise bei Polyethylen, bei Polypropylen, bei Polyethylenterephthalat (PET) oder polymerbeschichteten Papieren. Eine Oberflächenenergie ist dann gering, wenn sie 50 mN/m oder weniger beträgt. Für derartige unpolare Oberflächen werden Selbstklebmassen benötigt, die in besonderem Maße hochklebrig und gleichzeitig hochtackig sind. Die hierfür erforderliche hohe Klebkraft und hohe Anfassklebrigkeit (der sogenannte "Tack") lässt sich üblicherweise dadurch erhalten, dass die Fließfähigkeit der Klebmasse erhöht wird. Herkömmliche hochklebrige und hochtackige Klebmassen sind jedoch für den fliegenden Rollenwechsel bei unpolaren Folien- und Vliesmaterialien bei einem Spleißverfahren schlecht bzw. gar nicht geeignet. Eine Lösung hat die Schrift EP 06 819 521 A geliefert, indem sie eine Klebmasse auf Synthesekautschukbasis angeboten hat, deren klebtechnischen Parameter günstig für den Einsatz zur Verklebung unpolarer Oberflächen sind.

Folienmaterialien sind häufig Gleitmittel zugesetzt, um die Verarbeitungseigenschaften zu verbessern - etwa bei der Herstellung die Haftung der heißen Polymerschmelze an Oberflächen zu reduzieren -, insbesondere bekommt die Folie durch die Gleitmittel die für die jeweilige Anwendung gewünschten Oberflächeneigenschaften. Als Gleitmittel eingesetzt werden beispielsweise Verbindungen mit Alkoholen, Säuren, Seifen, Amiden oder Estern als funktionelle Gruppen; wie beispielweise Fettsäureamide. Typische Gleitmittelzusätze betragen 0,2 bis 2 %, insbesondere 0,2 bis 0,8 % in der Folienzusammensetzung.

Insbesondere bei der Verklebung auf Oberflächen aus gleitmittelhaltigen Materialien stellt sich aber nach wie vor ein Problem dar, da die insbesondere in Film- und Folienmaterialien regelmäßig eingesetzten Gleitmittel (auch als Slip-Additive oder High-Slip-Additive bezeichnet) - wie etwa Erucamide, Oleamide und dergleichen - sehr migrierfreudig sind und somit die Klebeigenschaften der eingesetzten Klebeschichten nachteilig beeinflussen, so etwa deren Anfassklebrigkeit und die initiale Klebkraft. Insbesondere ist es daher wünschenswert, das Auffließverhalten der verwendeten Klebmassen auf den genannten Oberflächen zu optimieren, ohne dass etwa die Klebkraft und die Scherfestigkeit der Klebmasse signifikant verschlechtert werden.

Die Aufgabe der Erfindung war demzufolge, ein Klebeband anzubieten, das insbesondere zur Verklebung von Folienmaterialien und/oder Filmmaterialien geeignet ist, insbesondere für solche, die migrierende Inhaltsstoffe wie Gleitmittel - etwa Erucamide, Oleamide oder dergleichen enthalten.

Besonders vorteilhaft ist es, wenn die Klebebänder für einen Prozess eines fliegenden Rollenwechsels bei hohen Bahngeschwindigkeiten von auf Rollen aufgewickeltem Flachbahnmaterial der vorgenannten Art geeignet ist. Ein - wenn auch nicht zwingend erforderlicher - Zusatzvorteil wäre es, wenn die entsprechende Klebmasse auch für die Verklebung auf einer Vielzahl anderer Materialien nutzbar wäre.

Die Aufgabe konnte überraschend gelöst werden durch ein Klebeband, umfassend zumindest eine Schicht einer Klebmasse, umfassend
(a) 35 bis 55 Gew.-% einer Elastomerkomponente,
(b) 20 bis 45 Gew.-% einer Klebharzkomponente
(c) 15 bis 40 Gew.-% einer weichmachenden Komponente, von der
   (c1) 8 bis 35 Gew.-% durch ein plastifizierendes Öl oder mehrere plastifizierende Öle
   (c2) optional bis zu 32 Gew.-% eines oder mehrerer, sich von plastifizierenden Ölen unterscheidende Weichmacher
gebildet werden;
dadurch gekennzeichnet, dass die Elastomerkomponente ein oder mehrere Polyvinylaromat-Polydien-Blockcopolymeren umfasst und
das Klebeband im Verlaufe seines Aufbaus einen spaltfähigen Träger aufweist.

Die vorgenannten Gewichtsprozentangaben beziehen sich dabei auf die Basisklebmassen-Zusammensetzung. Aus den jeweils angegebenen Gewichtsprozenten kann die Basisklebmassen-Zusammensetzung derart zusammengestellt werden, dass sich die Gesamtsumme zu 100 % addiert. Voraussetzung dabei ist jeweils, dass die genannten Komponenten in den angegebenen Anteilsbereichen liegen.

Basisklebmassen-Zusammensetzung im Vorhergehenden bedeutet, dass optionale Zusatzstoffe und Additive - wie sie etwa im Weiteren dieser Schrift noch genannt werden - additiv auf die vorgenannten 100 % der Basisklebmasse - aus den Komponenten (a), (b) (c1) und (c2) - zu rechnen sind, so dass die Anteile der resultierenden abgemischten Gesamtklebmassenformulierung entsprechend umzurechnen sind, abhängig von der Menge zugesetzter Zusatzstoffe beziehungsweise Additive.

Erfindungsgemäß werden mindestens 8 Gew.-% der Basisklebmasse von einem oder mehreren plastifizierenden Öl(en) (Komponente (c1)) gebildet. Als nicht-mineralölische Weichmacher (Komponente (c2)) werden solche weichmachenden Substanzen bezeichnet, die von den plastifizierenden Ölen der Komponente (c1) nicht umfasst sind. Nicht-mineralölische Weichmacher können optional zugegen sein, sofern die Bedingungen für das plastifizierende Öl erfüllt sind. Sofern im Rahmen dieser Schrift der Begriff "das plastifizierende Öl" verwendet wird, soll sich dieser für die Ausführungsformen, bei denen mehrere plastifizierende Öle zugegen sind, auf die plastifizierenden Öle in Gesamtheit beziehen, sofern nicht im Einzelnen anderes dargestellt ist. Beträgt die weichmachende Komponente (c) mehr als 35 Gew.-% der Basisklebmasse, so sind mindesten 5 Gew.-% (bis maximal 32 Gew.-%) des oder der nicht-mineralölischen Weichmacher (Komponente (c2)) zugegen.

Als plastifizierende Öle werden Mineralöle eingesetzt, insbesondere ausgewählt aus naphthenischen und paraffinischen Mineralölen.

In sehr vorteilhafter Ausführung weist die zumindest eine Schicht einer Klebmasse eines erfindungsgemäßen Klebebandes selbstklebende Eigenschaften auf. Im Rahmen dieser Schrift werden die Begriffe "selbstklebrig" und "haftklebrig" synonym verwendet, wie im Stand der Technik und der einschlägigen Literatur üblich. Ebenso werden die Begriffe "Klebstoff" und "Klebmasse" synonym verwendet.

Sofern im Rahmen dieser Schrift der "Klebstoff" oder "Klebmasse" verwendet wird, insbesondere bei der Beschreibung besonderer Ausführungen der Klebmasse oder bei Einsatz der Ausführungen des erfindungsgemäßen Klebebandes mit dieser Klebmasse, soll - unabhängig davon, ob an der entsprechenden Textstelle ein expliziter Hinweis darauf erfolgt oder nicht - die jeweilige Ausgestaltung der Klebmasse als Selbstklebmasse (Haftklebmasse) als besondere Ausführung der jeweiligen Ausgestaltung explizit eingeschlossen sein, so dass grundsätzlich für alle dargestellten Ausgestaltungen gilt, dass sie insbesondere auch vorteilhaft sind, wenn die dort beschriebene Klebmasse eine Selbstklebmasse ist.

Haftklebrigkeit ist die Eigenschaft eines Stoffes, bei der Anwendungstemperatur, üblicherweise bereits bei Raumtemperatur (hier definiert als 23 °C) bereits unter relativ schwachem Andruck eine dauerhafte Verbindung zu einem Haftgrund einzugehen. Stoffe, die diese Eigenschaft besitzen, werden als Haftklebstoffe bezeichnet. Haftklebstoffe sind seit langem bekannt. Häufig können sie nach Gebrauch im Wesentlichen rückstandsfrei vom Haftgrund wieder abgelöst werden. Haftklebstoffe sind in der Regel bei Raumtemperatur permanent eigenklebrig, weisen also eine gewisse Viskosität und Anfassklebrigkeit auf, so dass sie die Oberfläche des jeweiligen Haftgrunds bereits bei geringem Andruck benetzen. Die Fähigkeit eines Haftklebstoffs, auf Werkstoffen zu haften und Kräfte zu übertragen, beruht auf dem Adhäsionsvermögen und der Kohäsion des Haftklebstoffs. Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Das Ausmaß der Haftung von Selbst- beziehungsweise Haftklebstoffen ist auch von der Art des jeweiligen Haftgrundes abhängig. So gibt es etwa Haftklebstoffe, die insbesondere auf polaren, also hochenergetischen, Oberflächen - wie etwa die Oberfläche vieler Metalle, beispielsweise Stahl - anhaften, oder solche, die bevorzugt auf unpolaren, also niederenergetischen, Untergründen anhaften. Viele Polymermaterialien und Kunststoffe weisen niederenergetische Oberflächen auf, so gelten etwa Polyethylen (PE, mit niederer Dichte: LDPE, mit hoher Dichte: HDPE) Naturkautschuk (NR), Nitrilkautschuk (NBR), Silkonkautschuk (MVQ), Ethylenvinylacetat (EVA), Ethylen-Propylen-Dien-Kautschuk (EPDM), Polyethylenterephthatlat (PET), Polyoxymethylen (POM, Polyacetal), Polypropylen (PP), Polystyrol (PS), Polytetrafluorethylen (PTFE) und Polybutylenterephthalat (PBT) als Materialien mit niederenergetischen Oberflächen. Umgekehrt gibt es sogenannte "antiadhäsive" Untergründe, auf denen die üblichen Haftklebstoffe regelmäßig schlecht oder nicht anhaften. Die Selbst- beziehungsweise Haftklebmassen entsprechend der zumindest einen Schicht einer Klebmasse eines erfindungsgemäßen Klebebandes weisen insbesondere gute haftklebende Eigenschaften zu einer Vielzahl unpolarer (niederenergetischer) Materialien auf. Auch wenn diese Anwendung für erfindungsgemäße Klebebänder nicht die ausschließliche ist, so eignen sich erfindungsgemäße Klebebänder besonders gut zum Spleißen von Kunststofffolien und hier insbesondere von solchen, die Gleitmittel ("Slip-Additive", siehe hierzu beispielsweise Handbuch Kunststoff-Additive, 4.Auflage, 2016 C. Hanser, München, Kapitel 5.6) enthalten bzw. auf ihrer Oberfläche tragen. Ein nicht einschränkendes Beispiel stellen gleitmittelhaltige Polyolefinfolien dar.

Die Verklebung von gleitmittelhaltigen Folien/Filmen stellt insofern eine Herausforderung dar, da die Gleitmittel die Anfassklebrigkeit und die initiale Klebkraft stark negativ beeinflussen, wie im Handbuch Kunststoff-Additive (4.Auflage, 2016 C. Hanser, München) auf Seite 672 ausgeführt wird.

Durch das hervorragende Auffließverhalten lässt sich die Klebmasse entsprechend der zumindest einen Schicht einer Klebmasse eines erfindungsgemäßen Klebebandes auch besonders gut auf rauen Oberflächen einsetzen, wie zum Beispiel für Vliesstoffe ("nonwoven substrates").

Wie erwähnt ist die Klebmasse entsprechend der zumindest einen Schicht einer Klebmasse eines erfindungsgemäßen Klebebandes sehr vorteilhaft eine Selbstklebmasse.

Solche Klebebänder können einschichtig ausgebildet sein, also als sogenannte Transferklebebänder, bei denen die Klebmassenschicht insbesondere als Schicht auf einen temporären, insbesondere antiadhäsiven Träger (sogenannter Liner) aufgetragen ist. Zum Schutz kann auch die zweite Klebeoberfläche zeitweise mit einem Liner abgedeckt sein. Üblicherweise werden solche Transferklebebänder eingesetzt, indem die Klebmassenschicht dann mit ihrer freiliegenden Klebeoberfläche - gegebenenfalls nach Entfernen eines der Liner, sofern das Transferklebeband beidseitig abgedeckt war - auf eine der zu verklebenden Oberflächen aufgebracht, der noch vorhandene Liner entfernt und die zweite Kleboberfläche mit der anderen zu verklebende Oberfläche in Kontakt gebracht. Zur Stabilisierung solcher einschichtigen Klebmassensysteme, also solcher Transferklebebänder, können der Klebmasse Additive, wie beispielsweise Fasern, zugesetzt sein.

Erfindungsgemäße Klebebänder können vorteilhaft auch als einseitig oder doppelseitige Klebebänder ausgelegt sein, die eine Trägerschicht und gegebenenfalls weitere Schichten umfassen. Einseitig klebend ausgerüstete Klebebänder weisen dabei eine außenliegende Schicht der Klebemasse entsprechend der zumindest einen Schicht einer Klebmasse eines erfindungsgemäßen Klebebandes auf - die gegebenenfalls temporär mit einem Liner abgedeckt ist -, während die gegenüberliegende Seite nichtklebend ausgerüstet ist. Doppelseitig klebende Klebebänder weisen zwei außenliegende - ebenfalls gegebenenfalls temporär mit Linern abgedeckte - Klebmassenschichten auf, von denen zumindest eine der außenliegenden Klebmassenschichten der zumindest einen Schicht einer Klebmasse eines erfindungsgemäßen Klebebandes entspricht, aber auch beide außenliegenden Klebmassenschichten solche Schichten sein können. Sofern die außenliegenden Klebmassenschichten beide auf einer Klebmasse entsprechend der zumindest einen Schicht einer Klebmasse eines erfindungsgemäßen Klebebandesbasieren, können sie chemisch identisch sein oder sich unterscheiden, also unterschiedlich zusammengesetzt sein.

Unterscheiden sich die außenliegenden Klebmassenschichten doppelseitiger Klebebänder chemisch, so kann die zweite, nicht der zumindest einen Schicht einer Klebmasse eines erfindungsgemäßen Klebebandes entsprechende Klebmasse auch eine gänzlich andere Klebmasse sein, etwa eine Selbstklebemasse auf anderer chemische Basis - wie beispielweise eine Acrylatklebemasse, eine Polyurethanklebemasse, eine Silikonklebemasse, eine Kautschukklebemasse -, eine selbstklebrige oder nichtselbstklebrige aktivierbare Klebemasse - etwa eine hitzeaktivierbare, eine strahlungsaktivierbare oder eine feuchtigkeitsaktivierbare Klebemasse -, oder grundsätzlich jede anders geartete Klebemasse.

Doppelseitig klebende Klebebänder können symmetrisch oder asymmetrisch aufgebaut sein, so können etwa beide außenliegenden Klebmassenschichten dieselbe Dicke oder unterschiedliche Dicken aufweisen.

Die erfindungsgemäßen Klebebänder haben hervorragende Klebeeigenschaften. Sie lassen sich besonders vorteilhaft auch überall dort einsetzen, wo es für eine gute Verklebung auf hervorragende Auffließeigenschaften auf eine oder beide Substratoberflächen ankommt.

Das erfindungsgemäße Klebeband ist in einer sehr vorteilhaften Ausführungsform derart gestaltet, dass es für den fliegenden Rollenwechsel von auf Rollen aufgewickeltem Flachbahnmaterial geeignet ist, insbesondere von Flachbahnmaterialien mit niedrigen Oberflächenenergien und/oder sehr rauer Oberflächen, wie beispielweise Vliese sie aufweisen. Die Oberflächenenergie eines Materials gilt dann als gering, wenn sie 50 mN/m oder weniger beträgt. Das erfindungsgemäße Klebeband ist vorteilhaft insbesondere für den fliegenden Rollenwechsel von Folienmaterialien und/oder Filmmaterialien geeignet, insbesondere solchen Folienmaterialien und/oder Filmmaterialien, die migrierende Inhaltsstoffe enthalten, wie beispielweise Gleitmittel - etwa Erucamide, Oleamide oder dergleichen, die sich insbesondere auch auf der Oberfläche der Folien-/Filmmaterialien befinden können. Grundsätzlich lassen sich für diesen Einsatzzweck auch Transferklebebänder, ein- oder doppelseitige Klebebänder einsetzen, wie sie vorstehend beschrieben sind.

Solche Klebebänder für den fliegenden Rollenwechsel umfassen aber vorteilhaft zumindest zwei gegenüberliegende Klebmassenschichten, nämlich eine obere sowie eine untere Klebmassenschicht. Vorteilhaft sind dies Selbstklebmasseschichten. Die erfindungsgemäßen Klebebänder weisen im Verlaufe ihres Aufbaus einen spaltfähigen Träger auf.

Die Bezeichnung der Klebmassenschichten als "obere" und als "untere" Klebmasse werden dabei wie üblich gewählt entsprechend der Positionierung des Klebebandes im Prozess des fliegenden Rollenwechsels (in dieser Schrift auch als "Spleißverfahren" bezeichnet): Die obere Klebmasse dient im Spleißverfahren dazu, die entsprechende Seite ("Oberseite") des erfindungsgemäßen Klebebands mit dem Bahnanfang der neuen Rolle und mit der fast abgespulten Bahn der alten Rolle zu verbinden, wodurch die Bahnen beider Rollen über das Klebeband untereinander verbunden werden. Die untere Klebmasse dient dazu, die hier entsprechende Seite ("Unterseite") des erfindungsgemäßen Klebebands mit der zweitobersten Wicklung zu verbinden, wodurch die oberste und die zweitoberste Wicklung der neuen Rolle über das Klebeband zunächst untereinander verbunden werden. Im weiteren Verlauf des Spleißverfahrens wird beim Spalten des spaltfähigen Trägers die Verbindung der oberen beiden Wicklungen der Rolle wieder getrennt, und zwar derart, dass die von der Oberseite der jeweiligen Wicklung abgekehrten klebenden Bereiche der oberen Klebmasse und der unteren Klebmasse von dem nunmehr gespaltenen Träger nichtklebend abgedeckt bleiben.

Will man ein solches Spleißverfahren vorteilhaft gestalten, kann man dies über die konkrete Ausgestaltung der oberen Klebmasse und der unteren Klebmasse im Hinblick auf deren Klebkraft, Anfassklebrigkeit und Viskosität bewirken. Die Berücksichtigung der komplexen Viskosität bei der Wahl der unteren Klebmasse führt zu Lösungen, bei denen ein kalter Fluss der unteren Klebmasse verhindert wird. Hierdurch kann die Klebmasse an der unteren Seite des spaltfähigen Trägers nicht aus der Klebefuge austreten und mit der oberen Seite des spaltfähigen Trägers verkleben, wodurch ein Verblocken des Trägers vermieden wird und das System auch weiterhin spaltfähig bleibt.

Für die obere Klebmasse ist es insbesondere von Vorteil, eine solche Masse zu wählen, die den Ansprüchen für einen Folienspleißprozess genügt und insbesondere selbstklebrig ausgestaltet ist. Sie hat vorteilhaft eine hinreichende Anfassklebrigkeit (Tack), um bei dem Spleißprozess auf unpolaren Materialien, insbesondere polyolefinischen Untergründen gut anzufassen, sollte im Prozess nicht von derartigen Untergründen abscheren, besitzt also bevorzugt eine gute Scherfestigkeit darauf, und entwickelt auf dem polyolefinischen Material hinreichend gute Klebkräfte.

Die Klebmasse entsprechend der zumindest einen Schicht einer Klebmasse eines erfindungsgemäßen Klebebandes ist als obere Klebmasse eines Klebebandes für den fliegenden Rollenwechsel unpolarer Materialien - wie etwa polyolefinischer Materialien -, und insbesondere solcher Materialien, die Gleitmittel enthalten, hervorragend geeignet, ebenso für Flachbahnmaterialien mit rauen Oberflächen. Dementsprechend wird eine vorteilhafte Ausführungsforrm des erfindungsgemäßen Klebebandes dadurch gegeben, dass die Schicht aus der Klebmasse, die die folgenden Komponenten umfasst
(a) 35 bis 55 Gew.-% einer Elastomerkomponente, die ein oder mehrere Polyvinylaromat-Polydien-Blockcopolymeren umfasst,
(b) 20 bis 45 Gew.-% einer Klebharzkomponente
(c) 15 bis 40 Gew.-% einer weichmachenden Komponente, von der
   (c1) 8 bis 35 Gew.-% durch ein plastifizierendes Öl oder mehrere plastifizierende Öle
   (c2) 0 bis 32 Gew.-% durch einen oder mehrere nicht-mineralölische Weichmacher gebildet werden,
die obere Klebmassenschicht des erfindungsgemäßen Klebebandes ist.

Die untere Klebmassenschicht kann dabei eine solche sein, wie sie aus dem Stand der Technik für polare oder unpolare Materialien an sich bekannt ist.

Es hat sich jedoch herausgestellt, dass die zumindest eine Schicht einer Klebmasse auch als untere Klebmassenschicht eines solchen Klebebandes sehr vorteilhaft verwendet werden kann. Eine weitere vorteilhafte Ausführungsform des erfindungsgemäßen Klebebandes ist daher derart realisiert, dass sowohl die obere als auch die untere Klebmassenschicht durch eine Klebmasse gebildet werden, die sich zusammensetzt aus mindestens den folgenden Komponenten
(a) 35 bis 55 Gew.-% einer Elastomerkomponente, die ein oder mehrere Polyvinylaromat-Polydien-Blockcopolymeren umfasst,
(b) 20 bis 45 Gew.-% einer Klebharzkomponente
(c) 15 bis 40 Gew.-% einer weichmachenden Komponente, von der
   (c1) 8 bis 35 Gew.-% durch ein plastifizierendes Öl oder mehrere plastifizierende Öle
   (c2) 0 bis 32 Gew.-% durch einen oder mehrere nicht-mineralölische Weichmacher gebildet werden.

Die beiden Klebmassen, die bei dieser Ausführungsform die untere und die obere Klebmassenschicht bilden, können dabei in ihrer Zusammensetzung komplett identisch sein. Sie können sich aber auch unterscheiden, solange beide Klebmassen jeweils für sich der generellen Zusammensetzung mit den Komponenten (a), (b) und (c) in den vorstehend angegebenen Anteilsbereichen entsprechen.

Vorteilhaft ist es für das erfindungsgemäße Klebeband, wenn als obere Klebmasse und/oder als untere Klebmasse eine Klebmasse eingesetzt wird, die eine Klebkraft auf einem Polyethylen-Haftgrund von 2,0 N/cm, bevorzugt von 3,0 N/cm oder mehr (Messmethode KK PE 180°, siehe weiter hinten) aufweist. Hierdurch wird ein besonders effizientes Haften des Klebebands an dem zu verbindenden unpolaren Flachbahnmaterial erzielt, was die Beständigkeit der Verbindung und somit die Effizienz des Spleißverfahrens insgesamt noch weiter verbessert.

Weiterhin ist es vorteilhaft, wenn als obere Klebmasse eine Klebmasse verwendet wird, die eine Anfassklebrigkeit entsprechend einer Rollweglänge von 40 mm oder weniger (Messmethode Test RBT, vgl. experimenteller Teil) aufweist, wobei es besonders vorteilhaft ist, wenn diese als Maß für die Anfassklebrigkeit verwendete Rollweglänge 20 mm oder weniger beträgt. Hierdurch wird ein besonders hoher Wirkungsgrad beim Verbinden der Bahnen durch Zusammenführen beider sich drehender Rollen erzielt.

### Zusammensetzung der zumindest einen Schicht einer Klebmasse eines erfindungsgemäßen Klebebandes

### Elastomerkomponente(a)

Die Elastomerkomponente (a) umfasst vorteilhaft ein oder mehrere Polyvinylaromat-Polydien-Blockcopolymere oder besteht vollständig aus diesen. Der Anteil an Polyvinylaromat-Polydien-Blockcopolymeren in der Elastomerkomponenten beträgt bevorzugt mindestens 90 Gew.-%. Typischerweise und erfindungsgemäß vorteilhaft ist das Polydien aus konjugiertem Dien wie insbesondere 1,3-Dien hergestellt.

Dabei beträgt der mittlere Diblock-Anteil, bezogen auf die gesamten Polyvinylaromat-Polydien-Blockcopolymere, bevorzugt mindestens 30 Gew.-% und sehr bevorzugt mindestens 50 Gew.-%. Der Diblock-Anteil kann sogar vorteilhaft bei mindestens 70 Gew.-% liegen.

Die Polydienblöcke der Polyvinylaromat-Polydien-Blockcopolymere weisen bevorzugt einen mittleren Vinyl-Anteil von weniger als 20 Gew.-%, bezogen auf die gesamten Polydienblöcke. Ebenso weisen vorzugsweise die Polydienblöcke der Polyvinylaromat-Polydien-Blockcopolymere einen mittleren Vinyl-Anteil von weniger als 17 Gew.-%, bevorzugt weniger als 13 Gew.-%, bezogen auf die gesamten Polydienblöcke auf.

Die Peakmolmasse zumindest eines Blockcopolymers der Elastomerkomponente liegt typischerweise zwischen 80 000 g/mol und 500 000 g/mol, bevorzugt zwischen 100 000 g/mol und 200 000 g/mol.

Die Elastomerkomponente enthält typischerweise mindestens einen Synthesekautschuk in Form eines Diblockcopolymers mit einem Aufbau A-B, sie kann zudem einen Synthesekautschuk in Form eines Blockcopolymers mit dem Aufbau A-B-A, (A-B)n, (AB)nX oder (A-B-A)nX enthalten,
worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen;
- X für den Rest eines Kopplungsreagenzes oder multifunktionellen Initiators und
- n für eine ganze Zahl ≥ 2 stehen.

Es können alle Synthesekautschuke der Haftklebemasseschicht Blockcopolymere mit einem Aufbau wie vorstehend dargelegt sein. Die Haftklebemasseschicht kann somit auch Gemische verschiedener Blockcopolymere mit einem Aufbau wie vorstehend enthalten.

Das zumindest eine geeignete Blockcopolymer umfasst also typischerweise einen oder mehrere gummiartige Blöcke B (Elastomerblöcke, Weichblöcke) und mindestens einen glasartigen Block A (Hartblöcke). Besonders bevorzugt ist mindestens ein Synthesekautschuk der Haftklebemasseschicht ein Blockcopolymer mit einem Aufbau AB, das in Kombination mit A-B-A, (A-B)2X, (A-B)3X und/oder (A-B)4X, wobei für A, B und X die vorstehenden Bedeutungen gelten, vorliegt.

Als Haftklebemasseschichten finden typischerweise solche auf Basis von Blockcopolymeren enthaltend Polymerblöcke überwiegend gebildet von Vinylaromaten (A-Blöcke), bevorzugt Styrol, und solche überwiegend gebildet durch Polymerisation von 1,3-Dienen (B-Blöcke) wie zum Beispiel Butadien und Isopren oder einem Copolymer aus diesen Anwendung.

Vorzugsweise besitzen die Blockcopolymere der Haftklebemasseschichten zumindest einen Polystyrolendblock.

Anstelle der bevorzugten Polystyrolblöcke können als Vinylaromaten auch Polymerblöcke auf Basis anderer aromatenhaltiger Homo- und Copolymere (bevorzugt C8- bis C12-Aromaten) mit Glasübergangstemperaturen von größer 75 °C genutzt werden wie zum Beispiel α-methylstyrolhaltige Aromatenblöcke. Weiterhin können auch gleiche oder unterschiedliche A-Blöcke enthalten sein.

Vinylaromaten zum Aufbau des Blocks A umfassen bevorzugt Styrol, α-Methylstyrol und/oder andere Styrol-Derivate. Der Block A kann somit als Homo- oder Copolymer vorliegen. Besonders bevorzugt ist der Block A ein Polystyrol.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren oder ein Polybutadien oder ein Polymer aus einem Gemisch aus Butadien und Isopren. Ganz besonders bevorzugt ist der Block B ein Polybutadien.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 25 °C insbesondere mindestens 50 °C und für B-Blöcke höchstens 25 °C insbesondere höchstens -25 °C) wider. Diese Angaben beziehen sich auf die reinen, unabgemischten Blockcopolymere.

Der Anteil an Hartblock in den Blockcopolymeren liegt bei mindestens 12 Gew.-% und maximal bei 40 Gew.-%, bevorzugt bei mindestens 15 Gew.-% und maximal bei 35 Gew.-%. Sofern es sich um ein Polyvinylaromat-Polybutadien-Blockcopolymer handelt, liegt der Hartblock-Anteil vorteilhaft bei mindestens 20 Gew.-%.

Die aus den A- und B-Blöcken resultierenden Blockcopolymere können gleiche oder unterschiedliche B-Blöcke enthalten, auch im Hinblick auf die Mikrostruktur. Mit "Mikrostruktur" ist das relative Verhältnis der für Polybutadien, Polyisopren oder ein anderes konjugiertes Dien wie insbesondere 1,3-Dien möglichen Monomerverknüpfungsarten 1,4-cis (in Polybutadien und Polyisopren), 1,4-trans (in Polybutadien und Polyisopren), 1,2 (in Polybutadien und Polyisopren) und 3,4 (in Polyisopren) gemeint; bevorzugt wird ein 1,4-Anteil (cis + trans) von > 80 Gew.-%, sehr bevorzugt von > 85 Gew.-%, jeweils bezogen auf die Polydienblöcke und ein 1,4-cis-Anteil von > 40 Gew.-% bezogen auf die Polydienblöcke; entsprechend beträgt der Anteil an 1,2- und/oder etwaig vorhandener 3,4-verknüpften Monomere in Summe, d.h. der sogenannte Vinyl-Anteil bestimmt nach Test IX, höchstens 20 Gew.-%, bevorzugt höchstens 17 Gew.-%, sehr bevorzugt höchstens 13 Gew.-%. Ein hoher Anteil an 1,4-Verknüpfung und insbesondere 1,4-cis-Verknüpfung der Monomereinheiten in den Polydien-Blöcken bzw. ein geringer Anteil an Vinyl-Gruppen führt zu einer geringeren Glasübergangstemperatur, so dass eine gute Anfassklebrigkeit auch bei tieferer Temperatur erreicht werden kann, was für einen Spleißprozess in kalter Umgebung vorteilhaft ist. Polybutadien ist auch deshalb bevorzugt als Sorte für den B-Block bzw. B-Blöcke. In einer alternativen Ausführungsform beziehen sich die quantitativen Angaben zu den Monomerverknüpfungsarten, wie insbesondere zum Vinylanteil, anstelle von Gew.-% auf mol-%.

Kommerziell erhältliche Blockcopolymer-Typen weisen häufig eine Kombination aus Polymeren unterschiedlicher Architektur auf. So enthält beispielsweise Kraton D1118, nominell ein lineares Polystyrol-Polybutadien Diblockcopolymer, gemäß Herstellerangabe (Kraton Polymers Product Guide, Kraton Performance Polymers Inc., 2016) 78 % Diblockcopolymer. Die oben gemachten Angaben zur Molmasse der Blockcopolymere beziehen sich jeweils auf diejenige Polymermode, die der in dem entsprechenden Zusammenhang genannten Blockcopolymerarchitektur von einem Fachmann zugeordnet werden kann. Angaben zur Molmasse sind in diesem Zusammenhang als Peakmolmasse zu verstehen. GPC erlaubt die Feststellung der Molmasse der einzelnen Polymermoden in einer Mischung aus verschiedenen Blockcopolymeren.

### Klebharzkomponente(b)

Die Haftklebemasseschicht weist neben dem mindestens einen Polyvinylaromaten-Polydien-Blockcopolymer mindestens ein Klebharz auf, um die Adhäsion in gewünschter Weise zu erhöhen.

Unter einem "Klebharz" wird entsprechend dem allgemeinem Fachmannverständnis ein oligomeres oder polymeres Harz verstanden, das die Adhäsion (den Tack, die Eigenklebrigkeit) der Haftklebemasseschicht im Vergleich zu der keinen Klebharz enthaltenden, ansonsten aber identischen Haftklebemasseschicht erhöht. Klebharze sind spezielle Verbindungen mit im Vergleich zu den Elastomeren niedriger Molmasse, üblicherweise mit einem gewichtsmittleren Molekulargewicht MW < 5.000 g/mol. Typischerweise beträgt das gewichtsmittlere Molekulargewicht von 400 bis 5.000 g/mol, bevorzugt von 500 bis 2.000 g/mol.

Das Klebharz sollte mit dem Elastomerblock der Blockcopolymere verträglich sein.

Besonders bevorzugt handelt es sich bei den Klebharzen zu mindestens 75 Gew.-% (bezogen auf den Gesamtklebharzanteil) um Kohlenwasserstoffharze oder Terpenharze oder eine Mischung dergleichen.

Die Klebharzkomponente (b) der Haftklebemasseschicht enthält sehr bevorzugt zu mindestens 75 Gew.-%, bezogen auf die Klebharzkomponente, zumindest ein Klebharz, das einen DACP (diacetone alcohol cloud point) von mindestens - 20 °C, bevorzugt mindestens 0 °C, und eine Erweichungstemperatur (Ring & Ball) von mindestens 85 °C, vorzugsweise mindestens 100 °C, und höchstens +140 °C aufweist.

Geeignete Klebharze sind, ohne sich einschränken zu wollen, unpolare Kohlenwasserstoffharze, zum Beispiel hydrierte und nicht hydrierte Polymerisate des Dicyclopentadiens, nicht hydrierte, partiell, selektiv oder vollständig hydrierte Kohlenwasserstoffharze auf Basis von C5-, C5/C9- oder C9-Monomerströmen, und Polyterpenharze auf Basis von α-Pinen und/oder β-Pinen und/oder δ-Limonen. Erfindungsgemäß bevorzugt handelt es sich bei den Klebharzen somit zu mindestens 75 Gew.-% (bezogen auf den Gesamtklebharzanteil) um Kohlenwasserstoffharze oder Terpenharze oder eine Mischung dergleichen. Vorgenannte Klebharze können sowohl allein als auch im Gemisch eingesetzt werden, wobei der Fachmann für Polyisopren-Blockcopolymere bzw. Polybutadien-Blockcopolymere gemäß gängiger Leitlinien zur Kompatibilität aus den Klebharzen der obigen Auflistung auswählt. Hierzu kann beispielsweise eine Publikation von C. Donker zu Rate gezogen werden (C. Donker, Proceedings of the Pressure Sensitive Tape Council, 2001, S. 149-164).

Kolophoniumharze sind ebenfalls alleine oder in Mischungen verschiedener Kolophoniumharze und oder Kohlenwasserstoffharze einsetzbar.

Unter Kolophoniumharz ist im Sinne dieser Erfindung typischerweise eine Verbindung im oben beschriebenen Molmassenbereich (MW < 5.000 g/mol) zu verstehen, die als Bauelemente zumindest eine aus Kolophonium stammende Struktureinheit enthält, wobei diese insbesondere ausgewählt ist aus Abietinsäure, Neoabietinsäure, Palustrinsäure, Dihydroabietinsäure, Dehydroabietinsäure, Pimarsäure, Isopimarsäure Derivaten dieser und Gemischen dieser. Sehr gut geeignet sind zum Beispiel Ester, die zwei, drei, vier oder mehr Kolophoniumeinheiten enthalten. Die Klebharze können hydriert, stabilisiert oder disproportioniert sein.

Der Anteil an Klebharzkomponente (b) in der Haftklebemasseformulierung wirkt sich positiv auf die Verklebungsfestigkeit aus. Daher sollte der Klebharzanteil nicht zu gering sein.

### Weichmachende Komponente (c)

### Plastifizierendes Öl (c1)

Bei dem zumindest einen plastifizierenden Öl handelt es sich um ein Mineralöl insbesondere ausgewählt aus naphthenischen und paraffinischen Mineralölen oder einem Gemisch verschiedener plastifizierender Öle. Mineralöle sind die durch Destillation von Erdöl, Kohle und/oder gegebenenfalls anderer fossiler Rohstoffe erhältlichen Öle und bestehen im Wesentlichen aus paraffinischen (gesättigte kettenförmige Kohlenwasserstoffe), naphthenischen (gesättigte ringförmige Kohlenwasserstoffe) und aromatischen (ringförmige Kohlenwasserstoffe mit aromatischem Doppelbindungssystem) Bestandteilen. Mineralöle können daneben auch noch Alkene (Olefine) sowie je nach Provenienz schwankende geringe Mengen an schwefelhaltigen und stickstoffhaltigen organischen Verbindungen enthalten. Zu Mineralölen siehe auch die Ausführungen bei D. Satas (F. C. Jagisch, J. M. Tancrede in Handbook of Pressure Sensitive Adhesive Technology, D. Satas (Hrsg.), 3. Aufl., 1999, Satas & Associates, Warwick, Rhode Island, Kapitel 16, S. 377-379).

Die aromatischen Anteile in erfindungsgemäß eingesetzten Mineralölen sollten vorteilhaft nicht zu hoch sein (bevorzugt < 5 %, weiter bevorzugt < 2 %, sehr bevorzugt liegt der aromatische Anteil bei 0 %) damit sie kompatibel mit den Weichblöcken der Elastomere sind und im Wesentlich inkompatibel mit den Vinylaromaten-Hartblöcken der Elastomere. Sehr gut geeignet sind zum Beispiel hochraffinierte Mineralöle wie Weißöle. Eingesetzt werden können grundsätzlich technische als auch medizinische Weißöle, letztere insbesondere entsprechend den Vorgaben des Europäischen Arzneibuchs, 9. Auflage. Diese medizinischen Weißöle sind farblos, geruchs- und geschmacksfrei; sie enthalten keine Aromaten und keine Schwefelverbindungen mehr.

Mineralölische Weichmacher weisen eine Glasübergangstemperatur von höchstens -25 °C auf bevorzugt von höchstens -50 °C. Ihre Schmelzviskosität bei 25 °C und 1 Hz liegt unterhalb 2 Pa*s insbesondere bei höchstens 1 Pa*s und sehr bevorzugt bei höchstens 0,5 Pa*s. Die Peakmolmasse solcher Weichharze liegt typischerweise oberhalb 500 g/mol und unterhalb 2000 g/mol.

### Nicht-mineralölische Weichmacher(Weichharze) (c2)

Das optional einsetzbare Weichharz bzw. Weichharzgemisch bietet weitere Formulierungsmöglichkeiten, um eine gewünschte Kohäsions-/Adhäsions-Balance einzustellen. Es hat typischerweise eine Erweichungstemperatur von < 30 °C (Ring & Ball), sehr bevorzugt handelt es sich um ein Weichharz oder Weichharzgemisch mit einer Schmelzviskosität bei 25 °C und 1 Hz von zumindest 2 Pa*s oder zumindest 20 Pa*s oder sogar von zumindest 50 Pa*s. Die Peakmolmasse solcher Weichharze liegt typischerweise oberhalb 200 g/mol und unterhalb 1500 g/mol oder sogar unterhalb 1000 g/mol. Insbesondere Peakmolmassen unterhalb 800 g/mol sind vorteilhaft. Bei dem Weichharz kann es sich bevorzugt um ein Kohlenwasserstoff- oder Polyterpen-basierendes Weichharz handeln. Das Weichharz oder das Weichharzgemisch kommt in Bezug auf die gesamte Klebemasse mit einem Anteil von 0 Gew.-% bis 32 Gew.-%, bevorzugt von mindestens 5 Gew.-% und höchstens 28 Gew.-%, sehr bevorzugt von mindestens 10 Gew.-% bis höchstens 22 Gew.-% zum Einsatz.

### Optionale weitere Bestandteile / Additive

Zusätzlich zu den Komponenten (a), (b) und (c) enthält die Klebemasse (100 %) darüber hinaus 0 bis 18 Gew.-%, vorzugsweise bis zu 10 Gew.-% weitere Additive.

Dazu können der Klebemasse als weitere Additive vor allem Schutzmittel zugesetzt werden. Hier seien Alterungsschutzmittel primärer und sekundärer Art, Licht- und UV-Schutzmittel sowie Flammschutzmittel genannt, aber auch Füllstoffe, Farbstoffe und Pigmente. Die Klebemasseschicht kann so beliebig gefärbt oder weiß, grau oder schwarz sein.

Als solche oder andere weitere Additive können typischerweise genutzt werden:
- primäre Antioxidantien wie zum Beispiel sterisch gehinderte Phenole, vorzugsweise mit einem Anteil von 0,2 bis 1 Gew.-% bezogen auf das Gesamtgewicht der Haftklebemasse,
- sekundäre Antioxidantien, wie zum Beispiel Phosphite oder Thioether, vorzugsweise mit einem Anteil von 0,2 bis 1 Gew.-% bezogen auf das Gesamtgewicht der Haftklebemasse,
- Prozessstabilisatoren wie zum Beispiel C-Radikalfänger,
   vorzugsweise mit einem Anteil von 0,2 bis 1 Gew.-% bezogen auf das Gesamtgewicht der Haftklebemasse,
- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Haftklebemasse,
- Verarbeitungshilfsmittel,
   vorzugsweise mit einem Anteil von 0,2 bis 1 Gew.-% bezogen auf das Gesamtgewicht der Haftklebemasse
- Endblockverstärkerharze,
   falls gewünscht vorzugsweise mit einem Anteil von 0,2 bis 10 Gew.-% bezogen auf das Gesamtgewicht der Haftklebemasse sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 10 Gew.-% bezogen auf das Gesamtgewicht der Haftklebemasse.

Die Art und Menge der Abmischkomponenten kann bedarfsweise ausgewählt werden und letztere auch höher als die bevorzugten Obergrenzen liegen. Erfindungsgemäß ist es auch, wenn die Klebemasseschicht einige oder sogar alle der genannten Zuschlagstoffe jeweils nicht aufweist.

Die Klebemasse kann auch schäumbar gestaltet sein, insbesondere indem ihr Mikroballons zugesetzt werden oder geschäumt, entweder durch expandierte Mikroballons oder anderweitig, vorliegen.

### Erfindungsgemäßes Klebeband

Wie eingangs dargelegt ist die zumindest eine Schicht einer Klebemasse eines erfindungsgemäßen Klebebandes für Transferklebebänder, also insbesondere einschichtige Klebmassenschichten (trägerlose Systeme) sowie für Klebebänder mit Trägerschichten, und zwar sowohl einseitig klebende Klebebänder als auch doppelseitig klebende Klebebänder, hervorragend geeignet.

Für typische und erfindungsgemäß vorteilhafte Transferklebebänder weist die Klebmassenschicht beispielsweise Klebemassen-Flächengewichte im Bereich von 30 bis 100 g/m² auf, also etwa als Schicht auf einem temporären Liner vorliegend. Bei optionaler Additivierung der Klebmasse (siehe auch oben) sind die Flächengewichte gegebenenfalls entsprechend anzupassen.

Auch für einseitige Klebebänder, die einen Träger, wie beispielweise ein Papier oder eine Folie aus Polyethylen, Polypropylen, Polyethylenterephthalat oder einem anderen Kunststoffmaterial, aufweisen, sind Flächengewichte der Klebmassenschicht von 30 bis 100 g/m² vorteilhaft, wobei je nach Anwendungszweck aber auch geringere oder höhere Flächengewichte gewählt werden können. Wie beschrieben kann die Klebmassenschicht auf dem Träger direkt aufliegen. Das einseitige Klebeband kann weitere Schichten aufweisen, die auf der der Klebmassenschicht abgewandten Seite des Trägers angeordnet sein können und/oder auch zwischen der Klebmassenschicht und dem Träger. Doppelseitige Klebebänder weisen zwei außenliegenden Klebmassenschichten auf, von denen ein oder beide der Klebmassenschichten unabhängig voneinander vorteilhaft Flächengewichte von 30 bis 100 g/m² aufweisen können. Auch hier gilt unabhängig für beide Klebmassenschichten, dass auch geringe oder höhere Flächengewichte günstig sein können. Doppelseitige Klebebänder können aus nur zwei Klebmassenschichten bestehen, aber auch weitere dazwischenliegende Schichten aufweisen. Zwischen den außenliegenden Klebmassenschichten ist bevorzugt ein Träger, etwa aus den für einseitige Klebebändern beschriebenen Materialien, angeordnet. Solche Trägerschichten können - verglichen mit den Klebmassenschichten - dünn ausgestaltet sein, typische Papierträger haben beispielweise Flächengewichte von 19 g. Auch hier können weitere Schichten im Klebeband vorgesehen sein.

Symmetrische Klebebänder oder asymmetrische Klebebänder, für Geometrie und/oder Zusammensetzung der jeweiligen Schichten, sind vorteilhaft realisierbar.

In besonders vorteilhafter Weise wird ein Klebeband zur Verfügung gestellt, dass zumindest eine obere außenliegende Klebmassenschicht, die aus einer Klebmasse entsprechend der zumindest einen Schicht einer Klebmasse eines erfindungsgemäßen Klebebandes gebildet ist, eine untere Klebmassenschicht, die zunächst grundsätzlich jede Klebmasse sein kann, und zumindest eine zwischen der oberen und der unteren Klebmassenschicht angeordnete spaltfähige Schicht beziehungsweise spaltfähige Schichtanordnung (im weiteren zusammenfassend als "Schichtsysteme" bezeichnet). Wie eingangs eingeführt werden als "spaltfähig" solche Träger bezeichnet, die parallel zu ihrer Flächenausdehnung spaltbar sind, und insbesondere solche Träger, die bezogen auf die Anforderungen in einem Spleißverfahren auch tatsächlich spalten. Erweiternd zu dieser Definition werden im Sinne der Erfindung jedoch alle Schichtsysteme als spaltfähig verstanden, die in der Lage sind, eine Trennung des Klebebands in der Fläche zu ermöglichen, also nicht nur in der Fläche spaltende Trägerschichten, sondern auch Schichtlaminate, die einen entsprechend geringen Zusammenhalt aufweisen, oder solche Schichten, die sich von weiteren Schichten des Klebebands, wie etwa auch einer der Klebmassenschichten, ablösen und somit das Klebeband in zwei Schichten auftrennen. Gemein ist den spaltfähigen Schichtsystemen, dass ihr Zusammenhalt (ihre Trennkraft) hinreichend groß ist, um das Klebeband so lange zusammenzuhalten, bis das Auftrennen (Aufspalten des Klebebandes) in der Anwendung beabsichtigt ist.

Üblicherweise wird der Masseauftrag der oberen Klebmasse in einem Bereich von 30 bis 100 g/m² gewählt, insbesondere in einem Bereich von 35 bis 70 g/m². Auf Grund der hohen Anfassklebrigkeit eignen sich Klebemassen entsprechend der zumindest einen Schicht einer Klebmasse eines erfindungsgemäßen Klebebandes auch sehr gut für geringere Masseaufträge wie z. B. von etwa 5 g/m² bis unterhalb 30 g/m².

Spaltfähige Schichten können etwa - wie bereits erwähnt - in der Fläche spaltbare "einschichtige" Trägerschichten, wie Papierschichten - sein, Laminate aus zwei Schichten, die voneinander trennbar sind, durch Kaschier-, Lack- oder Klebmassen zusammengehaltene Schichtverbunde (wie etwa in der EP 2 116 581 beschrieben), oder auch solche durch eine synthetische Polymerschichte beziehungsweise Lackschicht, die sich von einer Trägerschicht - wie Folie oder Papier - ablöst (vergleiche zum Prinzip der vorgenannten Beispiele etwa die EP 1 076 026 A und die EP 2 116 581 A).

Wie im Rahmen dieser Schrift durchgängig verwendet schließt die Charakterisierung von Klebmassenschichten als außenliegende Klebmassenschichten nicht aus, dass diese temporär mit einem Liner schützend abgedeckt sind. Vor der Anwendung wird der Liner dann entfernt.

Als spaltfähige Schichtsysteme kommen insbesondere alle spaltfähigen flächigen Schichtmaterialien und Schichtverbunde in Frage, insbesondere leicht spaltende Papiere, Papierverbundsysteme (beispielsweise Duplexpapiere und geleimte Papiersysteme), Folienverbundsysteme (beispielsweise geleimte Foliensysteme), polymere Verbundsysteme (beispielsweise coextrudierte polymere Verbundsysteme) und polymere Vliesstoffe.

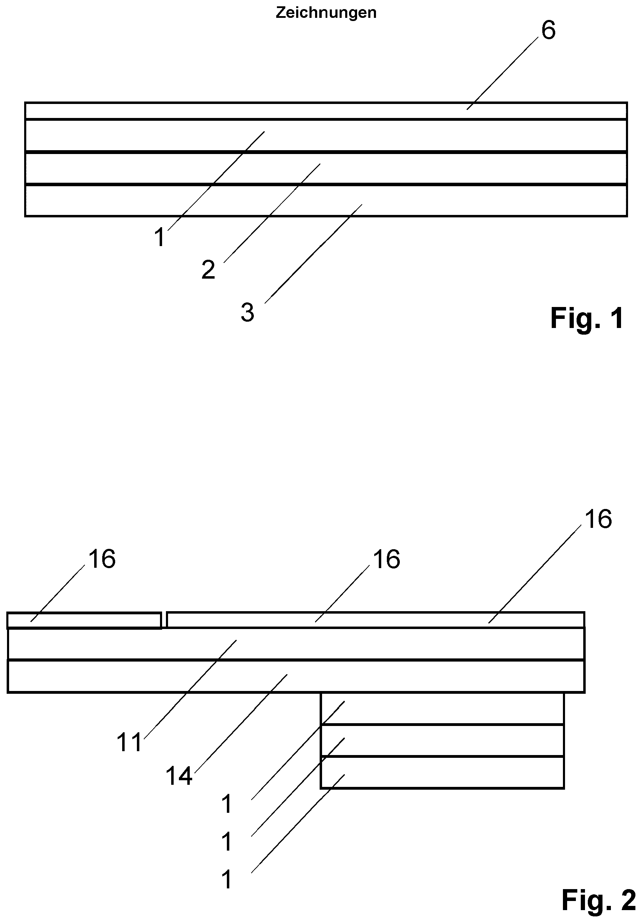

Üblicherweise kommt ein Schichtsystem zum Einsatz, bei dem die Spaltkraft insgesamt 5 bis 70 cN/cm beträgt, insbesondere 6 bis 60 cN/cm. Diese Werte beziehen sich auf die Ermittlung mit der Prüfmethode, wie sie in der EP 3 173 452 A, Abschnitt [0081] (Messmethode), in Verbindung mit Abschnitt [0079] (Probenvorbereitung) und der dortigen Figur 2 dargestellt ist, dort als Weiterspaltkraft bezeichnet.

Insbesondere für Produktaufbauten mit spaltfähigen Schichtsystem ist es erfindungsgemäß bevorzugt, dass die obere Klebmasse und die untere Klebmasse eine ausreichend hohe Klebkraft aufweisen. Insbesondere sollte die Klebkraft dieser Klebmassen auf den jeweiligen Oberflächen (Träger und zu verklebendes Bahnmaterial) größer ausfallen als die für ein Spalten des spaltfähigen Schichtsystems erforderliche Kraft.

Grundsätzlich können die obere Klebmasse und die untere Klebmasse auch identisch gewählt werden, wie weiter vorstehend bereits näher ausgeführt wurde.

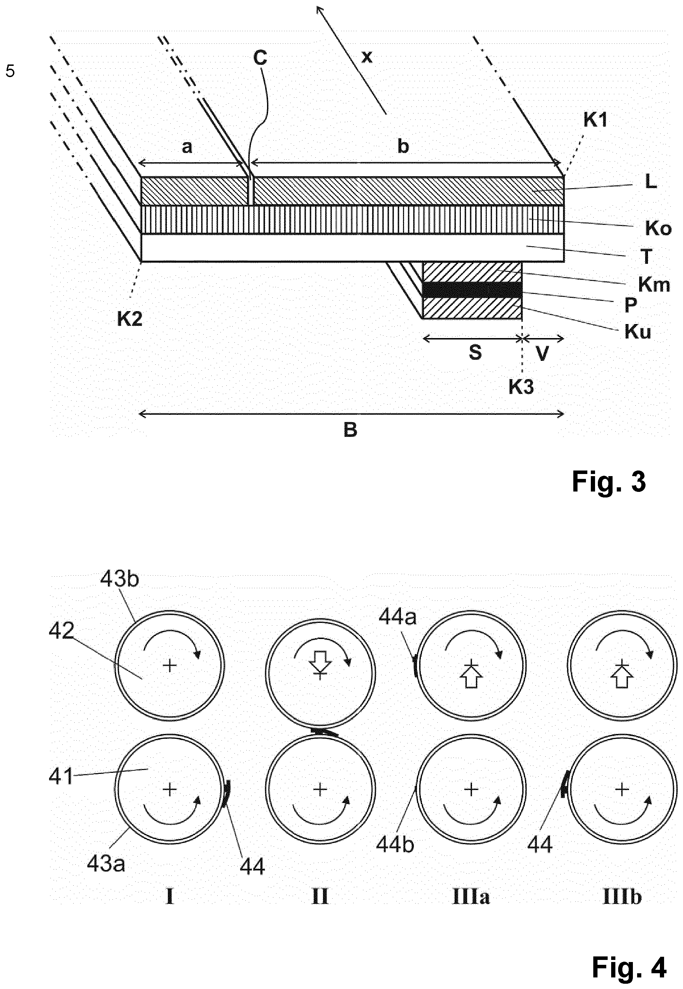

Die Aufbauten der erfindungsgemäßen Klebebänder können in unterschiedlichen Ausführungen realisiert werden. Insbesondere sei verwiesen auf die folgenden Schriften, deren Offenbarung vollumfänglich in den Offenbarungsgehalt dieser Schrift einbezogen wird:
- DE 196 32 689 A2 (Beiersdorf), insbesondere Aufbau gemäß Fig. 1 und die in Spalte 3, Zeile 31 bis 44 erläuternden Sachverhalte, wobei die dortige oben angeordnete Klebmasse (3; zwischen dem Träger 2 und der Abdeckung 4), gegebenenfalls auch die dortige untere Klebmasse (ebenfalls mit 3 bezeichnet), durch die hiesige Klebmasse entsprechend der zumindest einen Schicht einer Klebmasse eines erfindungsgemäßen Klebebandes substituiert ist,
- DE 199 02 179 A1 (Beiersdorf), insbesondere Aufbau gemäß Fig. 1 und die in Spalte 3, Zeile 31 bis 44 erläuternden Sachverhalte, wobei die dortige Klebmasse N1, gegebenenfalls auch die dortige Klebmasse N3, durch die hiesige Klebmasse entsprechend der zumindest einen Schicht einer Klebmasse eines erfindungsgemäßen Klebebandes substituiert ist, und wobei auch die dortige Klebmasse N2 durch eine solche hiesige Klebmasse substituiert sein kann,
- WO 91/08159 A1 (Norrman), insbesondere Aufbau gemäß Fig. 1 und die auf Seite 2, Zeile 35 bis Seite 4, Zeile 14 erläuternden Sachverhalte, wobei die dortige Klebmasse 3, gegebenenfalls auch die dortige Klebmasse 4, durch die hiesige Klebmasse entsprechend der zumindest einen Schicht einer Klebmasse eines erfindungsgemäßen Klebebandes substituiert ist,
- DE 198 41 609 A1 (Prinz), insbesondere Aufbauten gemäß Fig. 1 und die in den Spalte 3, Zeile 7 bis Zeile 37 erläuternden Sachverhalte, wobei die dortige Klebmasse 34, gegebenenfalls auch die dortige Klebmasse 32, durch die hiesige Klebmasse entsprechend der zumindest einen Schicht einer Klebmasse eines erfindungsgemäßen Klebebandes substituiert ist,
- US 2004/0075014 A1 (Jacobs et al.), insbesondere Aufbauten gemäß Fig. 1 und die in den Abschnitten [0049] bis [0054] erläuternden Sachverhalte, wobei die dortige Klebmasse 3, gegebenenfalls auch die dortige Klebmasse 2 durch die hiesige Klebmasse (3, 13) entsprechend der zumindest einen Schicht einer Klebmasse eines erfindungsgemäßen Klebebandes substituiert ist,
- US 2005/0126688 A1 (Bean et al.), insbesondere Aufbauten gemäß der Fig. 2a, 2b, 2c und 2d und die in den Abschnitten [0024] bis [0037] erläuternden Sachverhalte, wobei die dortigen Klebmassen 20 bzw. 20a, gegebenenfalls auch die dortige Klebmasse 30a und 30b bzw. 30c, durch die hiesige Klebmasse entsprechend der zumindest einen Schicht einer Klebmasse eines erfindungsgemäßen Klebebandes substituiert ist,
- US 6,432,241 B1 (Congard et al.), insbesondere Aufbauten gemäß der Fig. 1 und 2, und die in Spalte 3, Zeilen 52 bis 64 und Spalte 4, Zeile 34 bis Spalte 6, Zeile 53 erläuternden Sachverhalte, wobei die dortigen Klebmassen 12, gegebenenfalls auch die dortige Klebmasse 15, durch die hiesige Klebmasse entsprechend der zumindest einen Schicht einer Klebmasse eines erfindungsgemäßen Klebebandes substituiert ist,
- US 2002/0056784 A1 (Davies et al.), insbesondere Aufbau gemäß Fig. 2, und die in den Abschnitten [0038] bis [0052] erläuternden Sachverhalte, wobei die dortigen Klebmassen 16, gegebenenfalls auch die dortige Klebmasse 24, durch die hiesige Klebmasse entsprechend der zumindest einen Schicht einer Klebmasse eines erfindungsgemäßen Klebebandes substituiert sind,
- EP 2 130 886 A (tesa SE), insbesondere Figuren 1, 2, 3 und 4, und die insbesondere in Abschnitt [0022] erläuterten Sachverhalte (dort irrtümlich auf die Figuren 1a bis 1d bezogen, dabei entspricht Fig. 1a = Fig. 1, Fig. 1b = Fig. 2, Fig. 1c = Fig. 3 und Fig. 1d = Fig. 4), wobei die dortige obere Klebmasse 3, gegebenenfalls auch die dortige untere Klebmasse 3', durch die hiesige Klebmasse entsprechend der zumindest einen Schicht einer Klebmasse eines erfindungsgemäßen Klebebandes substituiert ist,
- EP 2 130 887 A, EP 2 130 888 A und EP 2 130 889 A, insbesondere jeweils dortige Figuren und die hierzu in der Offenbarung erläuterten Sachverhalte, wobei die dortigen Klebemasse M, gegebenenfalls auch die Klebemassen M_{O} und/oder M_{U}, durch die hiesige Klebmasse entsprechend der zumindest einen Schicht einer Klebmasse eines erfindungsgemäßen Klebebandes substituiert ist,
ohne sich durch den Bezug auf die vorgenannten Ausführungsformen in der Erfindung aber unnötig beschränken zu wollen.

Es ist insbesondere auch von Vorteil, wenn das Klebeband einen nichtspaltfähigen Träger umfasst, dessen obere Seite mit der Klebmasse entsprechend der zumindest einen Schicht einer Klebmasse eines erfindungsgemäßen Klebebandes beschichtet ist und dessen untere Seite vollständig oder zumindest teilweise mit der oberen Seite des spaltfähigen Schichtsystems verbunden ist. Durch Verwenden eines nichtspaltfähigen Trägers, der die Bahn der alten Rolle mit dem Bahnanfang der neuen Rolle vor und auch nach Spalten des spaltfähigen Schichtsystems verbindet, wird eine besonders belastbare Verbindung beider Bahnen erzielt und die Effizienz des Spleißverfahrens weiterhin gesteigert. Insbesondere vorteilhaft ist dabei, wenn die untere Seite des nichtspaltfähigen Trägers (ganz oder teilweise) mit der oberen Seite des spaltfähigen Schichtsystems über eine verbindende Klebmasse verbunden ist (fünflagiger Aufbau, wenn das spaltfähige Schichtsystem eine einzige Schicht ist beziehungsweise als eine solche aufgefasst wird). Diese Verbindung kann grundsätzlich beliebig herbeigeführt werden, beispielsweise mit einer Klebmasse, einer aushärtenden Schmelzklebmasse und dergleichen. Auch hier kann vorteilhaft eine Klebmasse entsprechend der zumindest einen Schicht einer Klebmasse eines erfindungsgemäßen Klebebandes verwendet werden.

Durch Verwendung eines mechanisch stabilen nichtspaltfähigen Trägers wird beim Spleißverfahren die Effizienz der Verklebung der Bahn der alten Rolle mit dem Bahnanfang der neuen Rolle stark erhöht. Als Hauptträger können alle typischen flächenförmigen Trägermaterialien für Klebebänder eingesetzt werden, beispielsweise Papierträger aus ein- oder zweiseitig gestrichenem glatten Rohpapier sowie Folienträger, etwa BOPP-Folien, PET-Folien, aluminisierte PET-Folien und Aluminiumfolien. Wünschenswert ist hierbei, dass es sich um einen reißfesten Hauptträger handelt. Als verbindende Klebmasse kann eine beliebige typische Klebmasse eingesetzt werden. Günstig ist es, wenn die verbindende Klebmasse als harzmodifizierte Acrylatmasse gewählt ist, da in diesem Fall die Gefahr einer Verblockung des spaltfähigen Schichtsystems besonders gering ist. Auch für die verbindende Klebmasse lässt sich aber grundsätzlich auch die Klebmasse entsprechend der zumindest einen Schicht einer Klebmasse eines erfindungsgemäßen Klebebandes einsetzen oder eine andere Klebemasse.

Das Klebeband weist demnach über die gesamte Länge der Verklebung und damit auch über die gesamte Länge des Klebebandes einen spaltfähigen Träger auf. Der spaltfähige Träger kann sich über die gesamte Breite des nichtspaltfähigen Trägers erstrecken. Günstig ist es jedoch, wenn die Breite des spaltfähigen Trägers kleiner ist als die Gesamtbreite des Klebebandes, so dass nur in einem kleinen Teil seiner Breite eine Fixierung mit der darunter liegenden Bahn erzielt wird. Besonders günstig ist es hierbei, wenn der spaltfähige Träger mit dem nichtspaltfähigen Träger nicht bündig abschließt, sondern gegenüber diesem eingerückt an dessen unteren Seite befestigt ist. Hierdurch wird beim Spleißverfahren die Gefahr eines Auftretens von Reißern noch weiter vermindert. Die Einrückung beträgt in vorteilhaften Ausgestaltungen beispielweise 2 ± 1 mm, kann aber auch größer oder kleiner gewählt werden.

In einer weiteren erfindungsgemäßen Ausführung handelt es sich bei dem Klebeband um ein doppelseitiges Klebeband, das zumindest drei Schichten aufweist, von denen es sich bei der oberen und der unteren um eine Klebmasseschicht handelt, zwischen denen eine Trägerschicht angeordnet ist. Die Trägerschicht ist in dieser Variante nicht spaltbar ausgeführt. Es kann sich dabei um Folien handeln, wie sie aus dem Stand der Technik als Trägermaterial für doppelseitige Klebebänder bekannt sind. Sehr vorteilhaft werden Polyester-, wie Polyethylenterephthalat (PET), oder Polyolefinträger, wie insbesondere biaxialorientiertes Polypropylen (BOPP) gewählt. Zumindest eine der beiden Klebemasseschichten und insbesondere die obere und sehr bevorzugt beide bestehen aus einer Klebemasse entsprechend der zumindest einen Schicht einer Klebmasse eines erfindungsgemäßen Klebebandes. Zur Optimierung der Verankerung der Klebemasseschicht(en) auf dem Trägermaterial kann letzteres chemisch und/oder physikalisch vorbehandelt und/oder beschichtet sein. Es ist auch in diesen Fällen günstig, zur Abdeckung einer oder beider Klebemasseschicht(en) Trennliner vorzusehen.

Weiterhin sind auch Klebebänder erfindungsgemäß, die keine Trägerschicht enthalten, also sogenannte Transferklebebänder. Hier befindet sich eine Schicht der Klebemasse entsprechend der zumindest einen Schicht einer Klebmasse eines erfindungsgemäßen Klebebandes auf einem Trennliner.

Die Erfindung umfasst weiter die Verwendung des erfindungsgemäßen Klebebands zum Verkleben von auf Rollen aufgewickeltem Flachbahnmaterial mit unpolaren Oberflächen im Verlauf eines fliegenden Rollenwechsels, insbesondere von Folien und/oder Vliesen, aber auch von Papieren, insbesondere mit unpolaren Strichen (als gestrichene Papiere werden Papiere bezeichnet, bei dem die Oberfläche mit einem Bindemittelauftrag - nämlich eben dem "Strich" - veredelt ist) oder auf hochgeleimten Papieren. Durch Einsatz des Klebebands wird die Effizienz des Spleißverfahrens insgesamt signifikant gesteigert.

Schließlich bietet die Erfindung ein Spleißverfahren für den fliegenden Rollenwechsel von auf Rollen aufgewickeltem unpolaren Flachbahnmaterial, insbesondere Folien und/oder Vliese, wobei dem Ende der obersten Bahn einer neuen Rolle eines unpolaren Flachbahnmaterials das erfindungsgemäße Klebeband (zumindest teilweise) hinterklebt wird, während die untere Seite des Klebebandes mit der darunter liegenden Bahn der neuen Rolle verklebt wird und diese hierdurch sichert, worauf die so ausgerüstete neue Rolle neben einer fast gänzlich abgespulten, zu ersetzenden Rolle platziert und auf die gleiche Oberflächengeschwindigkeit beschleunigt wird, die neue Rolle dann gegen die oberste Bahn der alten Rolle gedrückt wird, wobei die offen liegende Klebmasse des Klebebandes mit der alten Bahn bei im wesentlichen gleichen Geschwindigkeiten der Bahnen verklebt werden, während zugleich das spaltfähige System spaltet und die Klebmassen des spaltfähigen Systems mit den beiden gespalteten Resten des spaltfähigen Trägers nicht klebend abdeckt.

Im Folgenden soll die Erfindung unter Bezugnahme auf die Abbildungen näher beschrieben werden. Es zeigen hierbei
Fig. 1 eine schematische seitliche Darstellung einer Ausbildung eines erfindungsgemäßen Klebebandes (dreilagiger Aufbau, quer zur Längsrichtung des Klebebandes dargestellt), und
Fig. 2 eine schematische seitliche Darstellung einer weiteren Ausbildung eines erfindungsgemäßen Klebebandes (fünflagiger Aufbau, quer zur Längsrichtung des Klebebandes dargestellt).

In Fig. 1 ist ein erfindungsgemäßes Klebeband dargestellt, das für den fliegenden Rollenwechsel von auf Rollen aufgewickeltem Flachbahnmaterial mit unpolaren Oberflächen geeignet ist. Das Klebeband ist als dreilagiger Aufbau aus Träger 2, der spaltfähig oder nicht spaltfähig sein kann, ausgebildet, der an seiner oberen Seite mit der oberen Klebmasse 1 und an seiner unteren Seite mit der unteren Selbstklebeschicht 3 beschichtet ist. Handelt es sich bei Träger 2 um einen spaltfähigen Träger, dann ist ein derartiger Aufbau insbesondere einsetzbar, wenn der spaltfähige Träger 2 entlang seiner Flächenausdehnung eine hinreichende mechanische Belastbarkeit aufweist, um den Belastungen, die beim Verbinden der Bahn der fast abgespulten Rolle mit dem Bahnanfang der neuen Rolle auftreten, standhalten zu können.

Das Klebeband umfasst zusätzlich ein Trennsystem 6 zur nichtklebenden Abdeckung der oberen Klebmasse 1, so dass die klebende obere Seite des Klebebandes bei Lagerung geschützt ist. Als Trennsystem können alle herkömmlichen Trennpapiere oder sonstige antiadhäsiven oder antiadhäsiv beschichteten Materialien verwendet werden, etwa silikonisierte Trennpapiere oder silikonisierte Trennfolien. Das Trennsystem kann hierbei einteilig oder mehrteilig (nicht in Fig. 1 dargestellt) ausgeführt sein.

In Fig. 2 ist eine weitere besonders günstige Ausbildung eines erfindungsgemäßen Klebebandes als fünflagiger Aufbau dargestellt. Diese Ausbildung des Klebebandsystems umfasst einen spaltfähigen Träger 12 und einen nichtspaltfähigen Träger 14, die miteinander verbunden sind. Die Verbindung ist hier als separate, verbindende Klebmasse 15 ausgeführt, die die obere Seite des spaltfähigen Trägers 12 mit einem Teil der unteren Seite des nichtspaltfähigen Trägers 14 verbindet. Somit ist der nichtspaltfähige Träger 14 an seiner oberen Seite mit der oberen Klebmasse 11 beschichtet und an einem Teil seiner unteren Seite mit der verbindenden Klebmasse 15, die den spaltfähigen Träger 12 am nichtspaltfähigen Träger 14 verankert. Der spaltfähigen Träger 12 ist hierbei gegenüber dem nichtspaltfähigen Träger 14 eingerückt bzw. versetzt angeordnet.

Die in Fig. 2 dargestellte Ausbildung weist ferner zusätzlich ein Trennsystem 16 zur nichtklebenden Abdeckung der oberen Klebmasse 11 auf, wofür alle herkömmlichen Trennpapiere verwendet werden können, etwa silikonisierte Trennpapiere oder silikonisierte Trennfolien. Besonders vorteilhaft ist das hier dargestellte zweiteilige Trennsystem 16a/16b, das in Längsrichtung in ein hinteres Abdeckungsteil 16a und ein vorderes Abdeckungsteil 16b unterteilt ist, etwa mittels einer Perforation oder einem Schlitz. Dies hat den Vorteil, dass das Klebeband zunächst mit dem Bahnanfang der neuen Rolle verklebt werden kann, wozu lediglich der klebende Bereich des Klebebands unter dem hinteren Abdeckungsteil 16a freigelegt wird und der klebende Bereich zur Verklebung mit der Bahn der alten Rolle durch das vordere Abdeckungsteil 16b weiterhin abgedeckt und somit geschützt bleibt.

### Referenzen

Allein aus der Angabe der jeweiligen Messmethoden ist nicht der Rückschluss zu ziehen, dass alle nachfolgend genannten Parameter für die vorliegende Schrift und die dargestellte Erfindung relevant sind.

Alle Angaben zur Glasübergangstemperatur im Rahmen dieser Schrift beziehen sich auf den Glasumwandlungstemperatur-Wert Tg der DSC-Messung (Dynamische Differenzkalometrie) nach DIN 53765:1994-03, sofern im Einzelfall nichts anderes angegeben ist.

Angaben zu Peakmolmassen, zu zahlenmittleren Molmasse Mn sowie zu gewichtsmittleren Molmasse Mw, sofern in dieser Schrift erwähnt und im Einzelnen nicht anders angeben, beziehen sich auf die Bestimmung per Gelpermeationschromatographie (GPC). Als Eluent wird THF eingesetzt. Die Messungen erfolgen bei 23 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Å sowie 10⁴ Å und 10⁶ Å mit jeweils ID 8,0 mm x 300 mm eingesetzt. Die Probenkonzentration beträgt 4 g/l, die Durchflussmenge 1,0 ml pro Minute. Es wird gegen PS Standards gemessen (µ = µm; 1 Å = 10⁻¹⁰ m).

GPC bietet sich als messtechnisches Verfahren zur Bestimmung der Molmasse einzelner Polymermoden in Gemischen verschiedener Polymere an. Für die im Sinne dieser Erfindung einsetzbaren durch lebende anionische Polymerisation hergestellten Blockcopolymere sind die Molmassenverteilungen typischerweise ausreichend eng, so dass Polymermoden, die sich Triblockcopolymeren, Diblockcopolymeren oder Multiblockcopolymeren zuordnen lassen, ausreichend voneinander aufgelöst im Elugramm auftreten. Es lässt sich dann die Peakmolmasse für die einzelnen Polymermoden aus den Elugrammen ablesen.

Sofern in dieser Schrift angegeben, beziehen sich DACP-Werte auf die folgende Bestimmungsmethode: In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5 %, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99 %, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

Erweichungstemperaturen für Harze, insbesondere Klebharze, werden durch die "Ring & Ball"-Methode nach ASTM E28 bestimmt und hierauf bezogen angegeben.

Angaben zur Schmelzviskosität mineralölischer Weichmacher und nicht-mineralölischer Weichmacher (Weichharze) beziehen sich auf die folgende Messung: Es wird ein Schubspannungssweep in einem schubspannungsgeregelten DSR 200 N Rheometer der Firma Rheometrics Scientific in Rotation durchgeführt. Es kommt ein Kegel/Platte-Messsystem mit einem Durchmesser von 25 mm (Kegelwinkel 0,1002 rad) zur Anwendung, der Messkopf ist luftgelagert und geeignet für Normalkraftmessungen. Der Spalt beträgt 0,053 mm und die Messtemperatur 25 °C. Die Frequenz wird von 0,002 Hz bis 200 Hz variiert und die Schmelzviskosität bei 1 Hz registriert.

Der Anteil an konjugiertem Dien in den Blöcken von Vinylaromatenblockcopolymer (auch Vinyl-Anteil genannt) kann mittels ¹H-NMR bestimmt werden. Zur spektroskopischen Untersuchung wurde folgendes Gerät verwendet: ¹H-NMR: Bruker AMX 500 (500.14 MHz). Als Standard diente das Lösungsmittelsignal δ (CHCl₃) =7.24 ppm. Die chemischen Verschiebungen sind immer in ppm angegeben. Die Kopplungskonstanten J sind in Hertz [Hz] angegeben. Die Signalmuster werden wie folgt angegeben: s (Singulett), bs (breites Singulett), d (Dublett), dd (Dublett vom Dublett), t (Triplett), q (Quintett), m (Multiplett).

### Experimente

Im Folgenden soll die Erfindung anhand einiger Experimente näher dargestellt werden, ohne sich durch die Wahl der Experimente und untersuchten Ausführungsformen unnötig beschränken zu wollen.

### Eingesetzte Rohstoffe

| | | Typ | Hersteller |
|---|---|---|---|
| Elastomere | Kraton D1118 | Polystyrol-Polybutadien-Blockcopolymer (78 % Diblock gemäß Herstellerangabe) | Kraton Performance Polymers |
| | Globalprene 5517 | Polystyrol-Polyisopren-Blockcopolymer (38 % Diblock gemäß Herstellerangabe) | LCY |
| Klebharze | Dercolyte A115 | Polyterpen Harz | DRT |
| Weichmacher | Wingtack 10 | C5-Harz | Cray Valley |
| | Pionier 2070P | Weißöl | Hansen und Rosental KG |
| Alterungsschutzmittel | Irganox 1010 | Sterisch gehindertes Phenol | BASF |
| Weichmacher (für Vergleichsversuche) | Foralyn 5020-F | Hydrierter Rosinester (aromatischer Weichmacher) | Eastman |

### Herstellung der untersuchten Proben

Die Rohstoffe wurden entsprechend der Zusammensetzung, wie sie in den nachfolgenden Tabellen angegeben ist, in ein Glas gegeben. Dazu wurde ein Lösemittelgemisch aus Toluol, Benzin und Aceton (im Mischungsverhältnis 30:56:14) gegeben, sodass ein Feststoffgehalt von 40 Gew-% erhalten wurde. Die Rohstoffe wurden anschließend auf einer Rollbank mindestens 2 Tage lang einem Lösevorgang unterworfen.

Die derart gelösten Klebmasselösungen wurden mit Hilfe eines Streichtisches der Firma Zentner auf eine silikonisiertes Trennpapier beschichtet und getrocknet, sodass im getrockneten Zustand eine Klebmassen-Schichtdicke von 55 g/m² erreicht wird. Die Trocknung erfolgte in einem Trockenofen bei einer Temperatur von 120 °C für eine Dauer von 20 Minuten.

Anschließend wurde - zur Herstellung eines sogenannten Lappenmusters - eine 36 µm dicke PET-Folie mit Hilfe einer Gummirolle auf die Klebmasse kaschiert.

Für die Untersuchungsmethoden Test KK PE 180°, Test RBT und Test SAFT wurde das Lappenmuster wie jeweils angegeben konfektioniert, das Trennpapier abgezogen und die so freigelegte Seite vermessen ("Prüfseite").

Für die Untersuchungsmethode LSM wurde das Lappenmuster wie unten angegeben weiterverarbeitet.

### Untersuchungsmethoden

### Test KK PE 180°: Klebkraft auf Polyethylen; Abzugswinkel 180°

Die Bestimmung der Klebkraft auf Polyethylen erfolgte bei einem Prüfklima von 23 °C +/-1 °C Temperatur und 50 % +/- 5 % rel. Luftfeuchte. Die Muster wurden auf 20 mm Breite zugeschnitten und mit der Prüfseite auf eine Polyethylen-Platte (PE-Platte) geklebt. Die PE-Platte wurde vor der Messung gereinigt und konditioniert, indem sie mit Isopropanol und Zellstoff gesäubert und danach 2h an der Luft liegen gelassen wurde, damit das Lösungsmittel abdampfen konnte. Danach erfolgte das Anrollen des Prüfmusters auf den Prüfuntergrund. Hierzu wurde das Tape mit einer 4 kg - Rolle fünfmal hin und her mit einer Aufrollgeschwindigkeit von 10 m/min überrollt. Die Klebkraftmessung erfolgte mit einer Zwick-Zugprüfmaschine bei einem Winkel von 180° und einer Geschwindigkeit von 300mm/min.

Die Messergebnisse sind in N/cm angegeben und sind gemittelt aus drei Einzelmessungen.

Der Test gilt im Sinne der erfindungsgemäß gestellten Aufgabe als bestanden, wenn die Klebkraft auf Polyethylen F_{K} ≥ 2 N/cm beträgt.

### Test RBT: Rolling Ball Tack

Die Bestimmung der Anfassklebrigkeit wurde wie folgt durchgeführt:
Als Maß für die Anfassklebrigkeit bei sehr kurzer Kontaktzeit wurde der sogenannte Rolling-Ball-Tack gemessen. Ein etwa 10 cm langer Streifen der Probe wurde derart horizontal auf der Prüfebene befestigt, dass die freiliegende Prüfseite nach oben zeigte. Eine Probenkugel aus Stahl (Durchmesser: 11 mm; Masse: 5,6 g) wurde mit Aceton gereinigt und für 2 h im Raumklima (Temperatur: 23 °C +/- 1 °C; relative Luftfeuchtigkeit: 50 % +/- 1 %) konditioniert. Zur Messung wurde die Stahlkugel durch Herabrollen von einer 65 mm hohen Rampe (Neigungswinkel: 21 °) im Schwerefeld der Erde beschleunigt. Von der Rampe wurde die Stahlkugel unmittelbar auf die klebende Oberfläche (Prüfseite) der Probe gelenkt. Der auf der Klebmasse bis zum Stillstand der Kugel zurückgelegte Weg wurde gemessen. Die so ermittelte Rollweglänge dient hierbei als inverses Maß für die Anfassklebrigkeit der Selbstklebemasse (d.h. je kürzer der Rollweg ist, desto höher ist die Anfassklebrigkeit und umgekehrt).

Der jeweilige Messwert (als Längenangabe in mm) ergab sich aus dem Mittelwert von fünf Einzelmessungen.

Der Test gilt im Sinne der erfindungsgemäß gestellten Aufgabe als bestanden, wenn die Rollweglänge I ≤ 25 mm, bevorzugt I ≤ 15 mm beträgt.

### Test SAFT: Wärmescherfestigkeit, SAFT-Test

Dieser Test dient der Schnellprüfung der Scherfestigkeit von Klebebändern unter Temperaturbelastung. Dafür wird die zu untersuchende Probe mit der Prüfseite auf eine temperierbare Stahlplatte geklebt, mit einem Gewicht (50 g) belastet und die Scherstrecke aufgezeichnet.

### Messprobenpräparation:

Die auf 10 mm * 50 mm zugeschnittene Klebebandprobe wird mit der anderen Klebemassenseite auf eine polierte, mit Aceton gereinigte Stahl-Prüfplatte (Werkstoff 1.4301, DIN EN 10088-2, Oberfläche 2R, Oberflächen-Rauigkeit Rₐ = 30 bis 60 nm, Abmessungen 50 mm * 13 mm * 1,5 mm) derart verklebt, dass die Verklebungsfläche der Probe Höhe * Breite = 13 mm * 10 mm beträgt und die Stahl-Prüfplatte am oberen Rand um 2 mm überragt. Anschließend wird mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Stahlplatte derart aufgehängt, dass das länger überstehende Ende des Klebebandes senkrecht nach unten zeigt.

### Messung:

Die zu messende Probe wird am unteren Ende mit einem Gewicht von 50 g belastet. Die Stahl-Prüfplatte mit der verklebten Probe wird bei 5 Minuten bei 30 °C gehalten und anschließend mit einer Rate von 9 K/min aufgeheizt (maximale Endtemperatur 200 °C, wenn vorher kein Abscheren der Probe eintritt).

### Ergebnis:

Es wird die Temperatur bei Erreichen eines Scherwegs von 1000 µm angegeben. Wird eine Temperatur von 200 °C erreicht, ohne dass der Scherweg bereits 1000 µm beträgt, so wird die Länge des Scherwegs bei 200 °C angegeben und die Messung beendet.

Das angegebene Ergebnis ist der Mittelwert aus zwei parallel verlaufenden Messungen. Der Test gilt im Sinne der erfindungsgemäß gestellten Aufgabe als bestanden, wenn die Temperatur T bei Erreichen eines Scherwegs von 1000 µm T ≥ 90 °C, bevorzugt T ≥ 100 °C beträgt.

### Test LSM: Anwendungstest an der Laborspleißmaschine

Der Test wird mit einem Probeklebeband durchgeführt, das wie in Fig. 3 dargestellt aufgebaut ist und im Wesentlichen dem Aufbau in Fig. 2 entspricht. Fig. 3 stellt dabei einen Querschnitt durch das Klebeband dar; die Länge des Klebebandes erstreckt sich in die Richtung senkrecht zur Papierebene (in der Fig. 3 schematisch als x-Richtung perspektivisch dargestellt).

Aus dem wie oben beschrieben hergestellten Lappenmuster wurde ein Streifen mit einer Breite B von 50 mm geschnitten, bestehend aus der PET-Folie als Trägerschicht T, der Klebmassenschicht Ko sowie dem Liner L, wobei dieses Klebeband zwei Längskanten K1 und K2 aufweist. Der Liner L ist durch einen Längsschnitt C in zwei Teile einzeln abziehbare Teile geklebt, mit den Breiten a = 18 mm zwischen der ersten Klebeband-Längskante K1 und dem Längsschnitt C und der Breite b = 32 mm zwischen dem Längsschnitt C und der zweiten Klebeband-Längskante K2.

Auf die freiliegende PET-Folienseite wurde ein doppelseitig klebendes Klebeband, bestehend aus einem flächig spaltfähigen Papierträger P, einer unteren Klebemassenschicht Ku und eine zum PET-Träger gerichtete Klebemassenschicht Km in Längsrichtung derart unterklebt, dass dessen eine Längskante K3 um einen Abstand V von der Klebeband-Längskante K1 angeordnet ist.

Aus diesem Klebestreifen wurden Abschnitte von 40 cm Länge abgelängt.

Der spaltbare Papierträger weist eine Spaltkraft (Weiterspaltkraft im Sinne der EP 3 173 452 A, Abschnitt [0081], siehe auch oben) von 20 cN/cm auf. Als Klebmassen für die Schichten Km und Ku werden herkömmliche Kautschukklebmassen eingesetzt, deren Klebkraft so hoch ist, dass im nachfolgenden Versuchsablauf kein Ablösen dieser Klebkräfte von den Subtraten, auf denen sie verklebt sind (Probensubstrat auf der Walzenoberfläche der Vorlagenwalze, Papierträger beziehungsweise PET-Folie), stattfindet, auch ein Kohäsionsbruch innerhalb dieser Schichten findet nicht statt.

Die Anwendungstests (Spleißtests) wurden durchgeführt an einer Laborspleißmaschine - schematisch dargestellt in Fig. 4 -, bestehend aus zwei achsenparallelen, mit synchronisierter Geschwindigkeit gegenläufig rotierbaren Walzen 41, 42, die gegeneinander bewegt werden können (Verringerung des Achsenabstandes bis zum Kontakt der Walzenoberflächen).

Beide Walzen 41, 42 haben einen Durchmesser von 600 mm und eine Breite von 600 mm; beide Walzen 41, 42 besitzen eine gummierte Oberfläche, die erste der Walzen - Vorlagenwalze 41 - mit einer Shorehärte (Shore A) von 80, die zweite der Walzen - Andruckwalze 42 - mit einer Shorehärte (Shore A) von 50 (jeweils bezogen auf DIN ISO 7619-1 (2012-02), mit 3 s Andruckzeit). Auf beiden Walzenoberflächen ist jeweils eine Lage des Probensubstrates 43a, 43b bündig und fest anhaftend aufgezogen. Als Probensubstrat 43a, 43b diente eine LDPE-Folie (Polyethylen niederer Dichte), High-Slip-Additive (Gleitmittelzusätze: Erucamid) wurden analytisch nachgewiesen; Oberflächenenergie des Probensubstrats 32 mN/m.

Auf die Oberfläche des auf der Vorlagenwalze 41 befindlichen Probensubstrats 43a wurde ein wie oben hergestellter und in Fig. 3 dargestellter Klebestreifen-Abschnitt 44 mit der Klebmasse Ku (vgl. Fig. 3) derart aufgeklebt, dass seine in Längsrichtung verlaufenden Kanten und somit auch der Spaltstreifen in einem Winkel von maximal 5° zur Achsenrichtung der Vorlagenwalze 1 verliefen, und zwar derart, dass die Kante K2 (vgl. Fig. 3) entgegen der Drehrichtung der Vorlagenwalze 41 angeordnet war (vgl. Fig. 4 I). Von dem Klebstreifen-Abschnitt 44 wurde das schmalere Teilstück (Breite a in Fig. 3) des Liners L (vgl. Fig. 3) abgezogen und das Klebebandende im Bereich der Kante K2 mit einem schwach haftklebenden Klebeband (in der schematischen Fig. 4 nicht separat dargestellt) auf der Probensubstratoberfläche 43a befestigt, wobei die Klebkräfte des schwach haftklebenden Klebebandes derart eingestellt waren, dass zum einen keine fliegende Fahne bei der Drehung der Vorlagenwalze 41 auftrat (das Klebebandende also auf der Oberfläche 43a festgehalten wurde), dass aber bei positiven Experimentverlauf ein sofortiges Ablösen des schwach klebenden Klebebandes von der Oberfläche 43a gesichert war. Dann wurde das längere Teilstück (Breite b in Fig. 3) des Liners L (vgl. Fig. 3) entfernt, so dass die darunter liegende Oberfläche der Klebmassenschicht Ko frei lag.

Beide Walzen 41, 42 wurden gegenläufig auf eine Rotationsgeschwindigkeit von 1000 m/min gebracht (vgl. gebogene Pfeile in Fig. 4). Sodann wurde die Andruckwalze 42 in Richtung der Vorlagenwalze 41 derart bewegt, dass für exakt eine Walzenumfanglänge ein Andruck von 200 N/m resultierte (Fig. 4 II), wobei das Klebeband 44 die Andruckstelle einmal durchlief. Hiernach wurden die Walzen wieder voneinander fortbewegt (Fig. 4 IIIa und 4 IIIb).

Fig. 4 IIIa zeigt den positiven Versuchsverlauf, wenn die untersuchte Klebmasse der Schicht Ko den Test besteht: Die Klebmassenoberfläche haftet an die Probensubstratoberfläche 43b der Andruckwalze 42 stark an, so dass der Papierträger P (vgl. Fig. 3) flächig spaltet und der Klebebandteil 44a umfassend die Klebmassenschicht Ko, den Träger T, die Klebmassenschicht Km und eine Bruchschicht der Papierschicht P auf der Andruckwalze 42 verbleibt, während der Klebebandteil 4b umfassend die Klebmasse Ku und die zweite Bruchschicht des Papierträgers P auf der Vorlagenwalze verbleibt.

Fig. 4 IIIb zeigt den negativen Versuchsverlauf, wenn die untersuchte Klebmasse der Schicht Ko den Test nicht besteht: Das Klebeband 44 haftet auf der Probensubstratoberfläche 43b der Andruckwalze 42 nicht an, und das Klebeband 44 verbleibt auf der Vorlagenwalze 41.

Das Prüfklima beträgt bei allen Tests: Temperatur 23 ± 1 °C; 50 ± 5 % relativer Luftfeuchte, Luftdruck 1013 ± 5 mbar, sofern nicht anders angegeben.

### Zusammensetzungen und Ergebnisse der Untersuchungen

### a) Erfindungsgemäße Beispiele

| **Rohstoffe ^{#}** | ***** | **B1** | **B2** | **B3** | **B4** | **B5** | **B6** |
|---|---|---|---|---|---|---|---|
| Kraton D1118, SBS | (a) | 48 | 48 | 35 | 45 | 55 | 0 |
| Globalprene 5517, SIS | (a) | 0 | 0 | 0 | 0 | 0 | 48 |
| Dercolyte A115 | (b) | 25 | 32 | 25 | 40 | 21 | 35 |
| Wingtack 10 | (c2) | 0 | 10 | 21 | 0 | 16 | 0 |
| Pionier 2070P | (c1) | 27 | 10 | 19 | 15 | 8 | 17 |
| Alterungsschutz | | 1 | 1 | 1 | 1 | 1 | 1 |
| **KK PE 180°, F_{K} [N/cm]** | | 2,14 | 4,80 | 2,78 | 5,74 | 3,28 | 2,50 |
| **RBT, I [mm]** | | 8 | 6 | 6 | 17 | 25 | 10 |
| **SAFT, T [°C]** | | 105 | 107 | 94 | 105 | 111 | 95 |
| **LSM **** | | b | b | b | b | b | b |

| | | | | | | | |
|---|---|---|---|---|---|---|---|
| ^{#} Angaben der Zusammensetzung jeweils in Gew.-Teilen. Bezogen auf die Basis-Klebmassenzusammensetzung aus den Komponenten (a), (b), (c1) und (c2) addieren sich die Gewichtsteile zu 100. Alterungsschutzmittel kommen additiv dazu. * entsprechende Komponente der Basiszusammensetzung ** b : bestanden; nb ; nicht bestanden; nd : nicht durchgeführt | | | | | | | |

### b) Vergleichsbeispiele

| **Rohstoffe ^{#}** | ***** | **VG1** | **VG2** | **VG3** | **VG4** | **VG5** | **VG6 ***** |
|---|---|---|---|---|---|---|---|
| Kraton D1118 | (a) | 40 | 42 | 60 | 48 | 35 | 45 |
| Dercolyte A115 | (b) | 45 | 48 | 16 | 25 | 25 | 25 |
| Wingtack 10 | (c2) | 15 | 0 | 0 | 0 | 40 | 30 |
| Foralyn 5020-F | (c2) | 0 | 0 | 0 | 27 | 0 | 0 |
| Pionier 2070P | (c1) | 5 | 10 | 24 | 0 | 0 | 0 |
| Alterungsschutz | | 1 | 1 | 1 | 1 | 1 | 0 |
| **Kommentar** | | zu geringer Anteil an Komponente (c1) in Komponente (c) | zu geringer Anteil an Komponente (c) | Komponenten (a) und (b) in falschen Anteilen | Keine Komponente (c1) | Keine Komponente (c1) | Keine Komponente (c1) |
| **KK PE 180° [N/cm]** | | 9,94 | 8,85 | 0,17 (!) | 3,24 | 10,92 | 7,11 |
| **RBT [mm]** | | 45 (!) | 38 (!) | 28 | 8 | 19 | 25 |
| **SAFT [°C]** | | 102 | 103 | 115 | 81 (!) | 93 | 102 |
| **LSM **** | | nd | nd | nd | nd | nb (!) | nb (!) |

| | | | | | | | |
|---|---|---|---|---|---|---|---|
| ^{#} Angaben der Zusammensetzung jeweils in Gew.-Teilen. Bezogen auf die Basis-Klebmassenzusammensetzung aus den Komponenten (a), (b), (c1) und (c2) addieren sich die Gewichtsteile zu 100. Alterungsschutzmittel kommen additiv dazu. * entsprechende Komponente der Basiszusammensetzung ** b : bestanden; nb ; nicht bestanden; nd : nicht durchgeführt *** entsprechend Klebmasse aus der DE 10 2006 053 439 A. Abweichungen zu dort angegebenen Werten resultieren aus der Verwendung eines anderen Probenträgermaterials (PET-Folie statt Papier) (!) Ergebnis erfüllt nicht die Anforderungen | | | | | | | |

## Patentansprüche

1. Klebeband, umfassend zumindest eine Schicht einer Klebmasse umfassend
(a) 35 bis 55 Gew.-% einer Elastomerkomponente,
(b) 20 bis 45 Gew.-% einer Klebharzkomponente
(c) 15 bis 40 Gew.-% einer weichmachenden Komponente, von der
(c1) 8 bis 35 Gew.-% durch ein oder mehrere plastifizierende Öle
(c2) optional bis zu 32 Gew.-% eines oder mehrerer, sich von plastifizierenden Ölen unterscheidende Weichmacher
gebildet werden; **dadurch gekennzeichnet, dass** die Elastomerkomponente ein oder mehrere Polyvinylaromat-Polydien-Blockcopolymeren umfasst und
das Klebeband im Verlaufe seines Aufbaus einen spaltfähigen Träger aufweist.

2. Klebeband nach Anspruch 1, **dadurch gekennzeichnet, dass**
als plastifizierendes Öl Mineralöle eingesetzt werden.

3. Klebeband nach einem der vorangehenden Ansprüche, **dadurch gekennzeichnet, dass**
die plastifizierenden Öle ganz oder teilweise ausgewählt sind aus naphthenischen und/oder paraffinischen Mineralölen, insbesondere aus medizinischen Weißölen.

4. Klebeband nach einem der vorangehenden Ansprüche, **gekennzeichnet durch** haftklebrige Eigenschaften.

5. Klebeband nach einem der vorangehenden Ansprüche, **dadurch gekennzeichnet, dass**
die Klebharzkomponente mindestens ein Klebharz umfasst, das einen DACP-Wert (diacetone alcohol cloud point) von mindestens - 20 °C und eine Erweichungstemperatur (Ring & Ball) von mindestens 85 °C aufweist, insbesondere zu 75 Gew.-%, bezogen auf die Klebharzkomponente.

6. Klebeband nach einem der vorangehenden Ansprüche, **dadurch gekennzeichnet, dass**
die Klebharzkomponente ein oder mehrere Kohlenwasserstoffharze und/oder Terpenharze umfasst, insbesondere zu 75 Gew.-%, bezogen auf die Klebharzkomponente.

7. Klebeband nach einem der vorangehenden Ansprüche, **dadurch gekennzeichnet, dass**
als sich von plastifizierenden Ölen unterscheidende Weichmacher Harze oder Harzgemische mit einer Erweichungstemperatur von weniger als 30 °C (Ring & Ball) und/oder einer Schmelzviskosität bei 25 °C und 1 Hz von zumindest 2 Pa*s eingesetzt werden.

8. Klebeband nach einem der vorangehenden Ansprüche, umfassend zumindest zwei außenliegende Klebmassenschichten, **dadurch gekennzeichnet, dass**
zumindest eine der außenliegenden Klebmassenschichten durch eine Klebmasse nach einem der Ansprüche 1 bis 7 gebildet wird.

9. Klebeband nach Anspruch 8, **dadurch gekennzeichnet, dass**
beide außenliegenden Klebmassenschichten jeweils durch eine Klebmasse nach einem der Ansprüche 1 bis 7 gebildet werden.

10. Verwendung eines Klebebandes nach einem der vorangehenden Ansprüche für den fliegenden Rollenwechsel von Folien- oder Filmmaterialien enthaltend migrierende Inhaltsstoffe.

11. Verwendung nach Anspruch 10, **dadurch gekennzeichnet, dass** die Folien- beziehungsweise Filmmaterialien Gleitstoffe enthalten, insbesondere Erucamide und/oder Oleamide.

## Claims

1. Adhesive tape comprising at least one layer of an adhesive comprising
(a) 35 to 55 wt% of an elastomer component,
(b) 20 to 45 wt% of a tackifier resin component,
(c) 15 to 40 wt% of a plasticizing component, of which
(c1) 8 to 35 wt% is formed by one or more plasticizing oils
(c2) optionally up to 32 wt% is formed by one or more plasticizers other than plasticizing oils,
**characterized in that** the elastomer component comprises one or more polyvinylaromatic-polydiene block copolymers and
the adhesive tape in the course of its construction has a splittable carrier.

2. Adhesive tape according to Claim 1, **characterized in that**
mineral oils are used as plasticizing oil.

3. Adhesive tape according to any of the preceding claims, **characterized in that**
the plasticizing oils are wholly or partly selected from naphthenic and/or paraffinic mineral oils, more particularly from medical white oils.

4. Adhesive tape according to any of the preceding claims, **characterized by** pressure-sensitive adhesive properties.

5. Adhesive tape according to any of the preceding claims, **characterized in that**
the tackifier resin component comprises at least one tackifier resin having a DACP (diacetone alcohol cloud point) of at least -20°C and a softening temperature (Ring & Ball) of at least 85°C, more particularly at 75 wt%, based on the tackifier resin component.

6. Adhesive tape according to any of the preceding claims, **characterized in that**
the tackifier resin component comprises one or more hydrocarbon resins and/or terpene resins, more particularly at 75 wt%, based on the tackifier resin component.

7. Adhesive tape according to any of the preceding claims, **characterized in that**
plasticizers used other than plasticizing oils comprise resins or resin mixtures having a softening temperature of less than 30°C (Ring & Ball) and/or a melt viscosity at 25°C and 1 Hz of at least 2 Pa*s.

8. Adhesive tape according to any of the preceding claims, comprising at least two external layers of adhesive, **characterized in that**
at least one of the external layers of adhesive is formed by an adhesive according to any of Claims 1 to 7.

9. Adhesive tape according to Claim 8, **characterized in that**
both external layers of adhesive are each formed by an adhesive according to any of Claims 1 to 7.

10. Use of an adhesive tape according to any of the preceding claims for the flying splice of foil or film materials containing migrating ingredients.

11. Use according to Claim 10, **characterized in that** the foil or film materials contain lubricants, more particularly erucamides and/or oleamides.

## Revendications

1. Ruban adhésif comprenant au moins une couche d'une masse adhésive comprenant
(a) 35 à 55 % en poids d'un composant élastomère,
(b) 20 à 45 % en poids d'un composant résine adhésive,
(c) 15 à 40 % en poids d'un composant plastifiant dont
(c1) 8 à 35 % en poids sont constitués d'une ou de plusieurs huiles plastifiantes
(c2) éventuellement jusqu'à 32 % en poids sont constitués d'un ou de plusieurs plastifiants se différenciant des huiles plastifiantes ;
**caractérisé en ce que** le composant élastomère comprend un ou plusieurs polymères séquencés polyvinylaromatique-polydiène et
le ruban adhésif présente, au cours de sa fabrication, un support pouvant être fendu.

2. Ruban adhésif selon la revendication 1, **caractérisé en ce que**
des huiles minérales sont utilisées comme huile plastifiante.

3. Ruban adhésif selon l'une quelconque des revendications précédentes, **caractérisé en ce que** les huiles plastifiantes sont entièrement ou partiellement choisies parmi les huiles minérales naphténiques et/ou paraffiniques, en particulier parmi les huiles blanches médicinales.

4. Ruban adhésif selon l'une quelconque des revendications précédentes, **caractérisé par** des propriétés auto-adhésives.

5. Ruban adhésif selon l'une quelconque des revendications précédentes, **caractérisé en ce que** le composant résine adhésive comprend au moins une résine adhésive qui présente une valeur DACP (point de trouble diacétone-alcool) d'au moins -20 °C et une température de ramollissement (anneau et bille) d'au moins 85 °C, en particulier à 75 % en poids, par rapport au composant résine adhésive.

6. Ruban adhésif selon l'une quelconque des revendications précédentes, **caractérisé en ce que** le composant résine adhésive comprend une ou plusieurs résines hydrocarbonées et/ou résines terpéniques, en particulier à 75 % en poids, par rapport au composant résine adhésive

7. Ruban adhésif selon l'une quelconque des revendications précédentes, **caractérisé en ce que** des résines ou des mélanges de résines présentant une température de ramollissement inférieure à 30 °C (anneau et bille) et/ou une viscosité à l'état fondu à 25 °C et 1 Hz d'au moins 2 Pa*s sont utilisés comme plastifiants se différenciant des huiles plastifiantes.

8. Ruban adhésif selon l'une quelconque des revendications précédentes, comprenant au moins deux couches de masse adhésive extérieures, **caractérisé en ce qu'**
au moins une des couches de masse adhésive extérieures est constituée d'une masse adhésive selon l'une des revendications 1 à 7.

9. Ruban adhésif selon la revendication 8, **caractérisé en ce que**
les deux couches de masse adhésive extérieures sont constituées chacune d'une masse adhésive selon l'une des revendications 1 à 7.

10. Utilisation d'un ruban adhésif selon l'une quelconque des revendications précédentes pour le changement de rouleau à la volée de matériaux en feuille ou en film contenant des ingrédients migrants.

11. Utilisation selon la revendication 10, **caractérisée en ce que**
les matériaux en feuille ou en film contiennent des lubrifiants, en particulier des érucamides et/ou des oléamides.
